(19) Europäisches Patentamt
European Patent Office
Office européen des brevets

(11) EP 4 727 120 A1

(12) EUROPEAN PATENT APPLICATION

(43) Date of publication:
15.04.2026 Bulletin 2026/16

(21) Application number: 24306681.8

(22) Date of filing: 14.10.2024

(51) International Patent Classification (IPC):
H04N 19/117 (2014.01)    H04N 19/124 (2014.01)
H04N 19/154 (2014.01)    H04N 19/172 (2014.01)
H04N 19/174 (2014.01)    H04N 19/176 (2014.01)
H04N 19/70 (2014.01)    H04N 19/82 (2014.01)
H04N 19/86 (2014.01)

(52) Cooperative Patent Classification (CPC):
H04N 19/117; H04N 19/124; H04N 19/154;
H04N 19/172; H04N 19/174; H04N 19/176;
H04N 19/70; H04N 19/82; H04N 19/86

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• GALPIN, Franck
  35235 THORIGNE-FOUILLARD (FR)
• POIRIER, Tangi
  35235 THORIGNE-FOUILLARD (FR)
• DUMAS, Thierry
  35700 RENNES (FR)
• GUERMOUD, Hassane
  35235 THORIGNE-FOUILLARD (FR)

(74) Representative: Vossius & Partner
Patentanwälte Rechtsanwälte mbB
Siebertstraße 3
81675 München (DE)

(54) ALTERNATIVE BASE QUANTIZATION PARAMETER

(57) Neural network in-loop filter. One method for filtering a reconstructed video frame includes generating the reconstructed video frame and applying one or more in-loop filters to the reconstructed video frame to generate a filtered reconstructed video frame, the one or more in-loop filters including a neural network in-loop filter that receives an input including an alternative base quantization parameter that is distinct from a base quantization parameter.

FIG. 1

## Description

FIELD

Embodiments, examples, aspects, and features relate to neural network based in-loop filters for video coding and decoding.

SUMMARY

Current implementations of neural network in-loop filters in video encoders and decoders receive limited inputs. The filtering profile of the neural network in-loop filters may be improved by providing additional inputs related to various modes of the video encoders and decoders. However, not all inputs provide an improvement in the filtering profile. Accordingly, there is a need to provide selected inputs that improve the filtering profile of the neural network in-loop filters while also addressing complexity concerns associated with such neural networks.

In some aspects, the techniques described herein relate to a method for filtering a reconstructed video frame, the method including: generating the reconstructed video frame; and applying one or more in-loop filters to the reconstructed video frame to generate a filtered reconstructed video frame, the one or more in-loop filters including a neural network in-loop filter that receives an input including an alternative base quantization parameter that is distinct from a base quantization parameter.

In some aspects, the techniques described herein relate to a device including: an encoder configured to: generate the reconstructed video frame, and apply one or more in-loop filters to the reconstructed video frame to generate a filtered reconstructed video frame, the one or more in-loop filters including a neural network in-loop filter that receives an input including an alternative base quantization parameter that is distinct from a base quantization parameter.

In some aspects, the techniques described herein relate to a non-transitory computer-readable medium including instructions that, when executed by an electronic processor, causes the electronic processor to perform a set of operations, the set of operation including: generating the reconstructed video frame; and applying one or more in-loop filters to the reconstructed video frame to generate a filtered reconstructed video frame, the one or more in-loop filters including a neural network in-loop filter that receives an input including an alternative base quantization parameter that is distinct from a base quantization parameter.

In some aspects, the techniques described herein relate to a device including: a decoder configured to generate the reconstructed video frame, and apply one or more in-loop filters to the reconstructed video frame to generate a filtered reconstructed video frame, the one or more in-loop filters including a neural network in-loop filter that receives an input including an alternative base quantization parameter that is distinct from a base quantization parameter.

Other examples, implementations, features, and aspects will become apparent by consideration of the detailed description and accompanying drawings.

BRIEF DESCRIPTION OF THE DRAWINGS

In the accompanying figures similar or the same reference numerals may be repeated to indicate corresponding or analogous elements. These figures, together with the detailed description below, are incorporated in and form part of the specification and serve to further illustrate various embodiments, examples, aspects, and features of concepts that include the claimed subject matter, and to explain various principles and advantages of those embodiments, examples, aspects, and features.

FIG. 1 illustrates a block diagram of a system within which aspects of various examples may be implemented.

FIG. 2 illustrates a block diagram of an example of a video encoder.

FIG. 3 illustrates a block diagram of an example of a video decoder.

FIG. 4 illustrates a block diagram of example in-loop filters used in the video encoder of FIG. 2 and/or in the video decoder of FIG. 3.

FIG. 5 illustrates a block diagram of example in-loop filters used in the video encoder of FIG. 2 and/or in the video decoder of FIG. 3.

FIG. 6 illustrates a block diagram of an example neural network based filter used in the in-loop filters of FIGS. 4 and 5.

FIG. 7 illustrates a block diagram of an example upsampling component of the neural network based filter of FIG. 6.

FIGS. 8A and 8B illustrate flowcharts for parameter selection for the neural network based in-loop filter of FIG. 6.

FIG. 9 illustrates an example intra template matching search area.

FIG. 10 illustrates an example special part of a convolutional filter.

FIG. 11 illustrates example gradient patterns for gradient linear model.

FIG. 12 illustrates an example luma block used to derive a direct block vector.

FIG. 13 illustrates filter shapes for extrapolation filter-based intra prediction.

FIG. 14 illustrates example types of reconstructed areas for extrapolation filter-based intra prediction.

FIG. 15 illustrates an example of generating predictions for different positions for current block by a diagonal order.

FIG. 16 illustrates an example L-shaped neighborhood for a given prediction block.

FIG. 17 illustrates an example combined prediction and transform information provided as an input to the neural network in-loop filter of FIG. 6.

FIG. 18 illustrates example inputs provided to the neural network in-loop filter of FIG. 6.

FIG. 19 illustrates example inputs provided to the neural network in-loop filter of FIG. 6.

FIG. 20 illustrates an example training process for the neural network in-loop filter of FIGS. 5, 18, and/or 19.

FIG. 21 illustrates an example training process for the neural network in-loop filter of FIGS. 5, 18, and/or 19.

FIG. 22 illustrates a flowchart of an example method for filtering a reconstructed video frame.

FIG. 23 illustrates a flowchart of an example method for filtering a reconstructed video frame.

FIG. 24 is diagram illustrating an example of the fifth alternative quantization parameter.

Skilled artisans will appreciate that elements in the figures are illustrated for simplicity and clarity and have not necessarily been drawn to scale. For example, the dimensions of some of the elements in the figures may be exaggerated relative to other elements to help improve understanding of the examples, aspects, and features presented in this disclosure.

The system, apparatus, and method components have been represented where appropriate by conventional symbols in the drawings, showing only those specific details that are pertinent to understanding of the various embodiments, examples, aspects, and features of the present disclosure so as not to obscure the disclosure with details that will be readily apparent to those of ordinary skill in the art having the benefit of the description herein.

DETAILED DESCRIPTION

Examples are herein described with reference to flowchart illustrations and/or block diagrams of methods, apparatuses (systems) and computer program products. It will be understood that each block of the flowchart illustrations and/or block diagrams, and combinations of blocks in the flowchart illustrations and/or block diagrams, can be implemented by computer program instructions. These computer program instructions may be provided to an electronic processor (sometimes a "processor") of a general purpose computer, special purpose computer, or other programmable data processing apparatus to produce a special purpose and unique machine, such that the instructions, which execute via the processor of the computer or other programmable data processing apparatus, create means for implementing the functions/acts specified in the flowchart and/or block diagram block or blocks. The methods and processes set forth herein need not, in some aspects, be performed in the exact sequence as shown and likewise various blocks may be performed in parallel rather than in sequence. Accordingly, the elements of methods and processes are referred to herein as "blocks" rather than "steps."

These computer program instructions may also be stored in a computer-readable memory (such as non-transitory computer-readable storage media) that can direct a computer or other programmable data processing apparatus to function in a particular manner, such that the instructions stored in the computer-readable memory produce an article of manufacture including instructions which implement the function/act specified in the flowchart and/or block diagram block or blocks.

The computer program instructions may also be loaded onto a computer or other programmable data processing apparatus that may be on or off-premises, or may be accessed via the cloud in any of a software as a service (SaaS), platform as a service (PaaS), or infrastructure as a service (IaaS) architecture so as to cause a series of operational blocks to be performed on the computer or other programmable apparatus to produce a computer implemented process such that the instructions that execute on the computer or other programmable apparatus provide blocks for implementing the functions/acts specified in the flowchart and/or block diagram block or blocks. It is contemplated that any part of any example, feature, aspect, or embodiment discussed in this specification can be implemented or combined with any part of any other example, feature, aspect, or embodiment discussed in this specification.

Further advantages and features consistent with this disclosure will be set forth in the following detailed description, with reference to the figures.

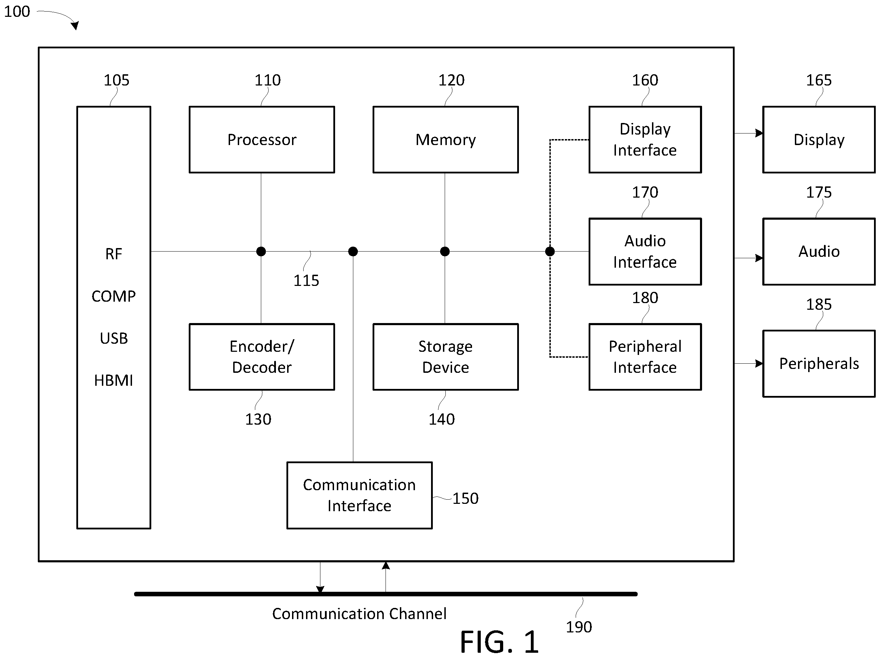

FIG. 1 illustrates a block diagram of a system in which various aspects and examples can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, mixed reality headsets, and servers. Elements of system 100, singly or in combination, may be embodied in a single integrated circuit, multiple ICs, and/or discrete components. For example, in at least one instance, the processing and encoder/decoder elements of system 100 are distributed across multiple ICs and/or discrete components. In various examples, the system 100 is communicatively coupled to other systems, or to other electronic devices, via, for example, a communications bus or through dedicated input and/or output ports. In various examples, the system 100 is configured to implement one or more of the aspects described in this application.

The system 100 includes an electronic processor 110, a memory 120, an encoder/decoder 130, a storage device 140, a communication interface 150, a display interface 160, an audio interface 170, and a peripheral interface 180. The system 100 may include more or fewer components than those illustrated in FIG. 1. In some examples, the electronic processor 110 is implemented as a microprocessor with separate memory, such as the memory 120. In other examples, the electronic processor 110 may be implemented as a microcontroller (with memory 120 on the same chip). In other examples, the electronic processor 110 may be implemented using multiple processors. In addition, the electronic processor 110 may be implemented partially or entirely as, for example, a field-programmable gate array (FPGA), an applications specific integrated circuit (ASIC), an x86 processor, and the like and the memory 120 may not be needed or be modified accordingly.

In the example illustrated, the memory 120 includes non-transitory, computer-readable memory that stores instructions that are received and executed by the electronic processor 110 to carry out the functionality of the system 100 described herein. The memory 120 may include, for example, a program storage area and a data storage area (for example, the storage device 140). The program storage area and the data storage area may include combinations of different types of memory, such as read-only memory and random-access memory. In some embodiments, the system 100 may include one electronic processor 110, and/or a plurality of electronic processors 110 in a cloud computer cluster arrangement, one or more of which may be executing none, all, or a portion of the applications or instructions of the system 100 provided below, sequentially or in parallel across the one or more electronic processors 110. The one or more electronic processor 110 comprising the system 100 may be geographically co-located or may be separated (for example, by miles), and interconnected via electronic and/or optical interconnects. One or more proxy servers or load balancing servers may control which one or more electronic processors 110 perform any part or all of the applications provided below.

The encoder/decoder 130 is configured, for example, to process data to provide an encoded video or decoded video. The encoder/decoder 130 may include its own processor and memory. The encoder/decoder 130 represents component(s) that may be included in a device to perform the encoding and/or decoding functions. A device may include an encoder, a decoder, or both. Additionally, the encoder/decoder 130 may be implemented as a separate element of system 100 or may be incorporated within the electronic processor 110 as a combination of hardware and software.

The system 100 may also include an input block 105. In various examples, the input devices of block 105 have associated respective input processing elements. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain examples, (iv) demodulating the down converted and band-limited signal, (v) performing error correction, and (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box example, the RF portion and its associated input processing element receives an RF signal transmitted over a wired (for example, cable) connection, and performs frequency selection by filtering, down converting, and filtering again to a desired frequency band. Various examples rearrange the order of the above-described (and other) elements, remove some of these elements, and/or add other elements performing similar or different functions. Adding elements may include inserting elements in between existing elements, for example, inserting amplifiers and an analog-to-digital converter. In various examples, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within electronic processor 110 as necessary. Similarly, aspects of USB or HDMI interface processing may be implemented within separate interface ICs or within electronic processor 110 as necessary. The demodulated, error corrected, and demultiplexed stream is provided to various processing elements, including, for example, electronic processor 110, and encoder/decoder 130 operating in combination with the memory and storage elements to process the data stream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The communication interface 150 enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

In some instances, data is streamed to the system 100, in various examples, using a Wi-Fi network such as a communications system implemented according to the IEEE 802.11 standard. The Wi-Fi signal of these examples is received over the communication channel 190 and the communication interface 150 which are adapted for Wi-Fi communications. The communication channel 190 of these examples is typically connected to an access point or router that provides access to outside networks including the Internet for allowing streaming applications and other over-the-top communications. Other examples provide streamed data to the system 100 using a set-top box that delivers the data over the HDMI connection of the input block 105. Still other examples provide streamed data to the system 100 using the RF connection of the input block 105.

The system 100 may provide an output signal to various output devices, including a display 165, speakers 175, and other peripheral devices 185. The other peripheral devices 185 include, in various examples of examples, one or more of a stand-alone DVR, a disk player, a stereo system, a lighting system, and other devices that provide a function based on the output of the system 100. In various examples, control signals are communicated between the system 100 and the display 165, speakers 175, or other peripheral devices 185 using signaling protocols such as AV.Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communication channel 190 via the communication interface 150. The display 165 and speakers 175 may be integrated in a single unit with the other components of system 100 in an electronic device, for example, a television. In various examples, the display interface 160 includes a display driver, for example, a timing controller (T Con) chip.

The display 165 and speaker 175 may alternatively be separate from one or more of the other components, for example, if the RF portion of input block 105 is part of a separate set-top box. In various examples in which the display 165 and speakers 175 are external components, the output signal may be provided via dedicated output connections, including, for example, HDMI ports, USB ports, or COMP outputs.

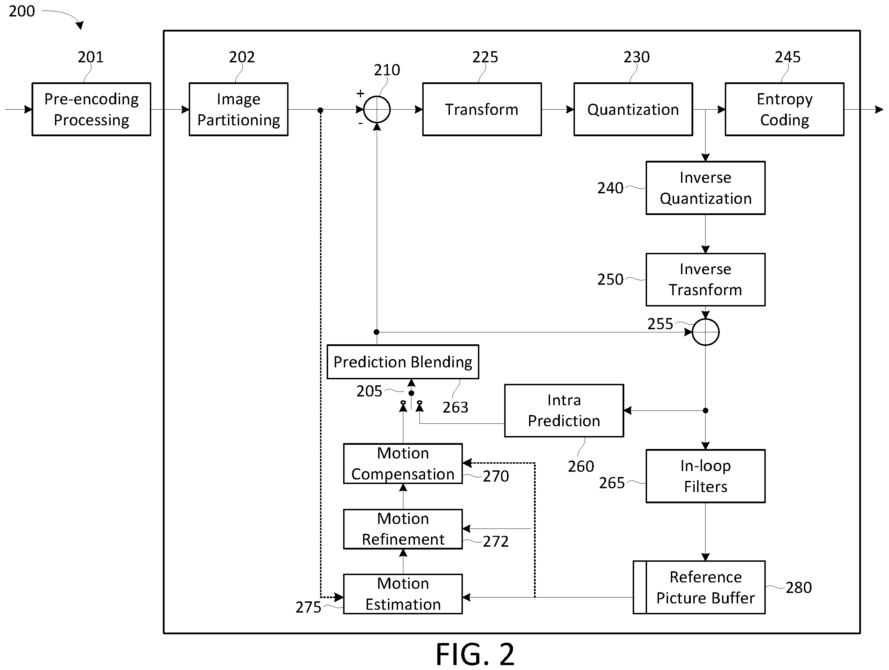

FIG. 2 illustrates an example video encoder 200, such as a High Efficiency Video Coding (HEVC) encoder, a Versatile Video Coding (VVC) encoder, and the like that can be used for encoding a video sequence, a streaming sequence, or the like. FIG. 2 may also illustrate an encoder in which improvements are made to the VVC standard or an encoder employing technologies similar to VVC, such as a Neural Network based Video Coding (NNVC) encoder under development by JVET (Joint Video Exploration Team).

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably.

Before being encoded, the video sequence may go through pre-encoding processing (at pre-encoding processing component 201), for example, applying a color transform to the input color picture (e.g., conversion from RGB 4:4:4 to YCbCr 4:2:0), or performing a remapping of the input picture components in order to obtain a signal distribution more resilient to compression (for instance, using a histogram equalization of one of the color components). Metadata can be associated with the preprocessing and attached to the bitstream.

In the encoder 200, a picture (for example, a video frame) is encoded by the encoder elements as described below. The picture to be encoded is partitioned (at image partitioning component 202) and processed in units of, for example, CUs (coding units). Each unit is encoded using, for example, either an intra or inter mode. When a unit is encoded in an intra mode, it performs intra prediction (at intra prediction component 260). In an inter mode, motion estimation (at motion estimation component 275) and compensation (at motion compensation component 270) are performed. The encoder decides (at component 205) which one of the intra mode or inter mode to use for encoding the unit, and indicates the intra/inter decision by, for example, a prediction mode flag. The encoder may also blend (at prediction blending component 263) intra prediction result and inter prediction result, or blend results from different intra/inter prediction methods.

Prediction residuals are calculated, for example, by subtracting (at component 210) the predicted block from the original image block. The motion refinement component 272 uses already available reference picture to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (at transform component 225) and quantized (at quantization component 230). The quantized transform coefficients, as well as motion vectors and other syntax elements, are entropy coded (at entropy coding component 245) to output a bitstream. The encoder can skip the transform and apply quantization directly to the non-transformed residual signal. The encoder can bypass both transform and quantization, e.g., the residual is coded directly without the application of the transform or quantization processes.

The encoder decodes an encoded block to provide a reference for further predictions. The quantized transform coefficients are de-quantized (at inverse quantization component 240) and inverse transformed (at inverse transform component 250) to decode prediction residuals. Combining (at component 255) the decoded prediction residuals and the predicted block, an image block is reconstructed. In-loop filters 265 are applied to the reconstructed picture to perform, for example, deblocking/SAO (Sample Adaptive Offset)/ALF (Adaptive Loop Filter) filtering to reduce encoding artifacts. The filtered image is stored at a reference picture buffer 280.

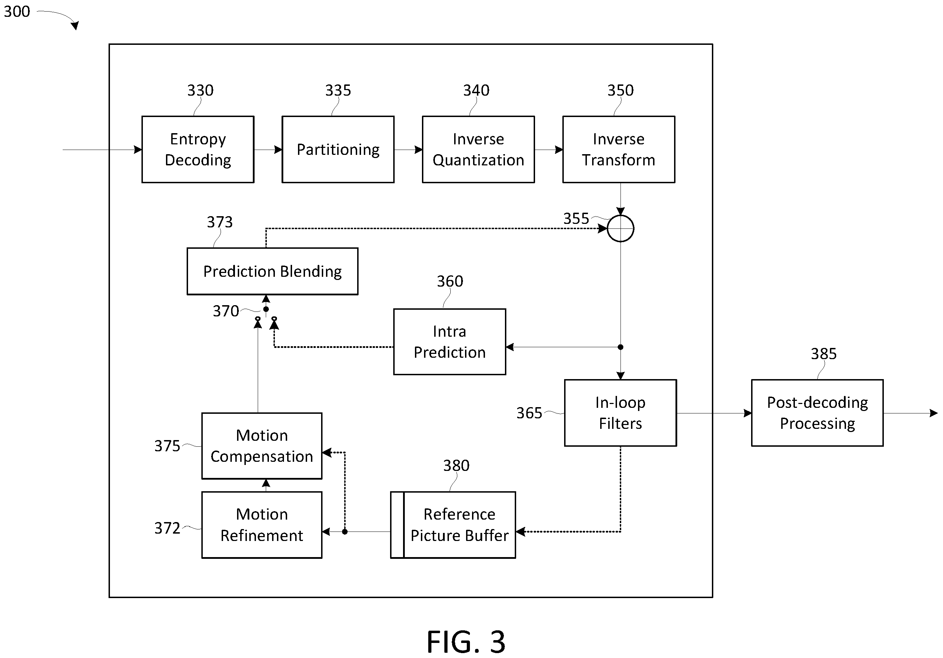

FIG. 3 illustrates a block diagram of an example video decoder 300, that can be used for decoding one or more attributes of a video steam according to an example. In the decoder 300, a bitstream is decoded by the decoder elements as described below. Video decoder 300 generally performs a decoding pass reciprocal to the encoding pass as described in FIG. 2. The encoder 200 also performs video decoding as part of encoding video data.

The bitstream is first entropy decoded (at entropy decoding component 330) to obtain transform coefficients, motion vectors, and other coded information. The picture partition information indicates how the picture is partitioned. The decoder may therefore divide (at partitioning component 335) the picture according to the decoded picture partitioning information. The transform coefficients are dequantized (at inverse quantization component 340) and inverse transformed (at inverse transform component 350) to decode the prediction residuals. Combining (at component 355) the decoded prediction residuals and the predicted block, an image block is reconstructed.

The predicted block can be obtained (at component 370) from intra prediction (at intra prediction component 360) or motion-compensated prediction (e.g., inter prediction) (at motion compensation component 375). The decoder may blend (at prediction blending component 373) the intra prediction result and inter prediction result, or blend results from multiple intra/inter prediction methods. Before motion compensation, the motion field may be refined (at motion refinement component 372) by using already available reference pictures. In-loop filters 365 are applied to the reconstructed image. The filtered image is stored at a reference picture buffer 380. For a given picture, the contents of the reference picture buffer 380 on the decoder 300 side may be identical to the contents of the reference picture buffer 280 on the encoder 200 side for the same picture.

The decoded picture can further go through post-decoding processing (at post-decoding processing component 385), for example, an inverse color transform (e.g., conversion from YCbCr 4:2:0 to RGB 4:4:4) or an inverse remapping performing the inverse of the remapping process performed in the pre-encoding processing (at pre-encoding processing component 201). The post-decoding processing can use metadata derived in the pre-encoding processing and signaled in the bitstream.

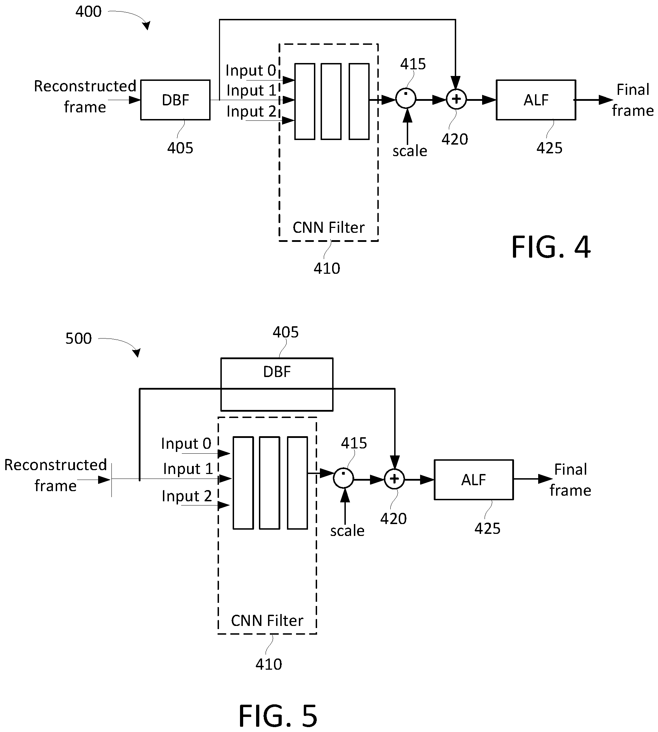

FIG. 4 illustrates a block diagram of example in-loop filters 400 used in the encoder 200 and/or the decoder 300. The reconstructed frame (for example, reconstructed video frame, reconstructed image, etc.) is processed by a deblocking filter (DBF) 405 (for example, one or more in-loop filters). The output of the DBF 405 is used as an input to a neural network in-loop filter (NNLF) 410 (for example, one or more in-loop filters). The reconstructed frame may be filtered per block and a correction is produced by the NNLF 410. The correction is modulated by a scale factor (using a scaling component 415) and added to the input (that is, the output of the DBF 405) at a blending component 420. An adaptive loop filter (ALF) 425 (for example, one or more in-loop filters) is optionally applied to the blended output and the final frame is provided from the in-loop filters 400.

FIG. 5 illustrates a block diagram of example in-loop filters 500 used in the encoder 200 and/or decoder 300. In the example of FIG. 5, the reconstructed frame is provided directly to the DBF 405 and the NNLF 410. The scaled output of the NNLF 410 is blended with the output of the DBF 405. The ALF 425 is optionally applied to the blended output and the final frame is provided from the in-loop filters 400. The in-loop filters 400, 500 may include additional filters, for example, a bilateral filter (BF), a sample-adaptive offset (SAO) filter, a Hadamard filter, a diffusion filter, or the like. These additional filters may be provided in any arrangement in the in-loop filters 400, 500 and some of these additional filters may be replaced by the NNLF 410. The one or more in-loop filters 400, 500 are applied to the reconstructed video frame to generate a filtered reconstructed video frame.

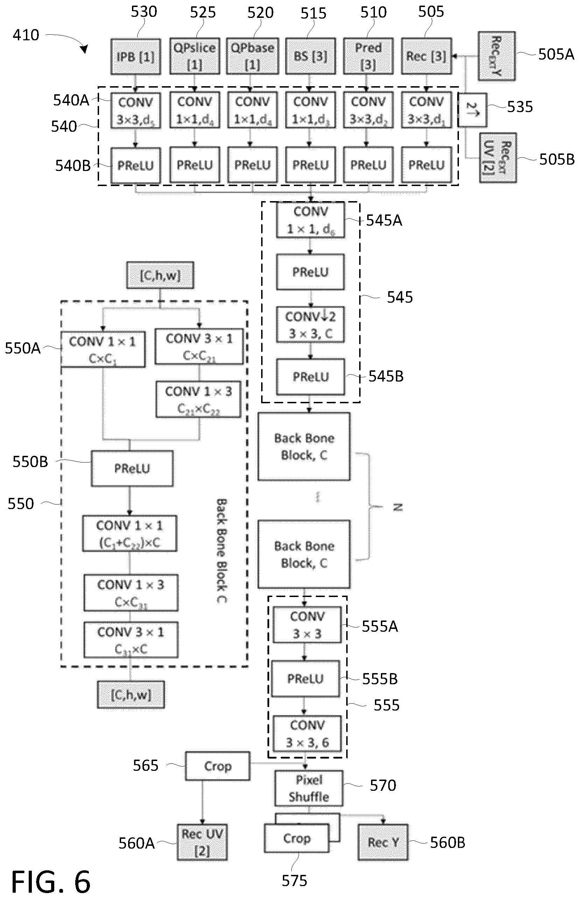

FIG. 6 illustrates a block diagram of an example NNLF 410 used in the in-loop filters of FIGS. 4 and 5. The reconstructed samples 505, predicted samples 510, boundary strength 515, base quantization parameter (QPbase) 520, slice QP (QPslice) 525 of the block or slice, and block prediction information (IPB) 530 are provided as inputs to the NNLF 410. The reconstructed samples 505 include reconstructed luma samples 505A and reconstructed chroma samples 505B. The reconstructed luma samples 505A and the reconstructed chroma samples 505B may be provided at different resolutions. The reconstructed chroma samples 505B are upsampled (using an upsampling component 535) to match the reconstructed luma samples 505B. In the example illustrated, the reconstructed chroma samples 505B are upsampled by 2 to match the size of the reconstructed luma samples 505A. In other examples, the reconstructed chroma samples 505B may be sampled differently or the reconstructed luma samples 505A may be downsampled to match the size of the reconstructed luma samples 505A and the reconstructed chroma samples 505B.

The inputs 505-530 are provided to a head block 540 of the NNLF 410. The head block 540 includes one or more convolution layers 540A and one or more parametric rectified linear units (PReLUs) 540B. The head block 540 processes the inputs 505-530 in parallel. The outputs of the head block 540 corresponding to each of the inputs 505-530 are concatenated and provided to a fusion and transition block 545. The fusion and transition block 545 includes one or more convolution layers 545A and one or more PReLUs 545B and performs data fusion and spatial downsampling on the concatenated data. The output of the fusion and transition block 545 processed through a sequence of backbone blocks 550. In the example illustrated, the NNLF 410 includes twenty-four backbone blocks 550. Each backbone block 550 may include a similar structure of one or more convolution layers 550A and one or more PReLUs 550B. The output of the sequency of backbone blocks 550 is provided to a tail block 555. The tail block 555 also similarly includes one or more convolution layers 555A and one or more PReLUs 555B and to process the output of the sequence of backbone blocks 550. The output of the tail block 555 is cropped (using a first cropping component 565) to generate the reconstructed chroma samples 560A. The output of the tail block 555 is also processed using a pixel shuffle component 570 and a second cropping component 575 to generate the reconstructed luma samples 560B. The reconstructed chroma samples 560A and the reconstructed luma samples 560B denote the reconstructed samples 560.

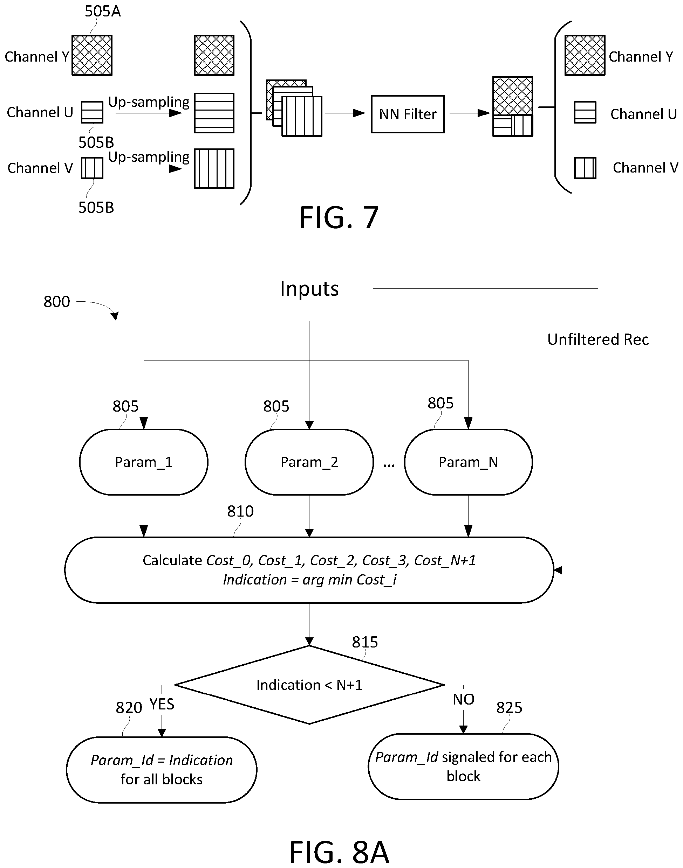

In the NNLF 410 of FIG. 6, a single model is used to process all three components of the reconstructed samples 505, that is, the reconstructed luma samples 505A (Channel Y) and the reconstructed chroma samples 505B (Channel U and V). Since the resolution of luma and chroma components are different, the upsampling component 535 pre-processes the reconstructed samples 505 as shown in FIG. 7 to upsample the chroma components. The reconstructed chroma samples 505B are upsampled to match the resolution of the reconstructed luma samples 505A and combined before being provided to the NNLF 410. The output of the NNLF includes the reconstructed luma samples 505A and reconstructed chroma samples 505B at the original resolution, that is, before being upsampled. The output reconstructed samples 505 are combined to regenerate the reconstructed and filtered frame. In one example, the upsampling component 535 uses a nearest neighbor interpolation method to upsample the reconstructed chroma samples 505B.

Returning to FIG. 6, the granularity of determination and parameter selection of the NNLF 410 is dependent on the resolution and the QP inputs 520, 525. That is, rather than using an implicit inference granularity and performing inference using fixed block sizes, the NNLF 410 uses an adaptive inference granularity. For a higher resolution and larger QP, the determination and selection will be performed in a larger region. The basic inference size and block extension in the inference region may be specified by the encoder 200. In one example, the default value for the basic inference size is 128 pixels (e.g., 128x128) and the default value for the block extension is 8 pixels. The inference block may be extended to include more samples from the neighboring blocks to mitigate the boundary artifacts and reduce distortion. For inference blocks located at the picture boundary, neighboring blocks may not exist. In this case, the extended samples of inference block may be padded with zero value.

In some examples, the QPbase 520 is adjusted to improve the adaptation of the NNLF 410. Each slice or block may determine whether to apply the CNN-based filter or not. When the CNN-based filter is determined to be applied to a slice/block, a conditional parameter that is derived from the base QP may be selected. The QPbase 520 input may be offset based on the selected conditional parameter. When the sequence level QP as q, the conditional parameter candidate list includes conditional parameters {Param_1, Param_2}. For low temporal layers, Param_1 = q, Param_2 = q-5. For high temporal layers, Param_1 = q, Param_2 = q+5. In other words, the second candidate is different across different temporal layers.

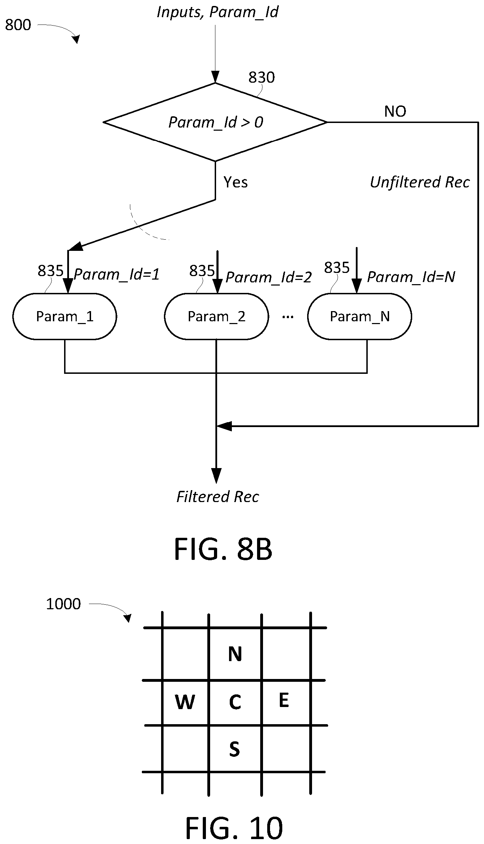

The selection process 800 is based on the rate-distortion cost at the encoder side. Indication of on/off control as well as the conditional parameter index may be signalled in the bitstream. FIG. 8A shows the parameter selection (at parameter blocks 805) of the NNLF 410 at encoder and decoder sides. All blocks in the current frame may be processed with all conditional parameters first. Then all costs 810, that is, Cost_0, Cost_1, ..., Cost_N+1, may be calculated and compared against each other to achieve optimum rate-distortion performance. The minimum cost is determined at step 815. In Cost_0, CNN-based filter is prohibited for all blocks (at bloc. In Cost_i, {i = 1, 2, ..., N}, the parameter Param_i is used for all blocks (that is, at step 820). In Cost_N+1, different blocks may prefer different parameters, and the information regarding whether to use CNN-based filter or which parameter to be used is signaled for each block (that is, at step 825). At decoder side, whether to use CNN-based filter or which parameter to be used for a block is based on the Param_Id parsed from the bit-stream as shown in FIG. 8B. At step 830, whether to use CNN-based filter is determined based on the Param_id. When CNN-based filter is to be used, the corresponding filtering method is determined based on the param_id at step 835. In one example implementation, param_1 corresponds to not using the CNN-based filter, param_2 corresponds to using CNN-based filter with a QPOffset of 0, param_3 corresponds to using CNN-based filter with a QPOffset of either of -5 or +5 based on the denotion. param_4 corresponds to using block-level CNN-based filter with a QPOffset of 0, -5, or +5.

For an all-intra configuration, parameter selection may be disabled while filter on/off control may still be preserved. A shared conditional parameter is used for the two chroma components to ease the burden in worst case at decoder side. In addition, the max number of conditional parameter candidates, that is, N, could be specified at encoder side (N = 2 by default).

The IBP 530 may specify the type of block. Example values denoting the type of block are provided in Table 1 below.

TABLE 1: Values Associated to Type of Block input to NNLF 410

| TYPE OF THE BLOCK | VALUE |
|---|---|
| Intra | 0 |
| N/A | 1 |
| IBC with residual | 2 |
| IBC skip | 3 |
| Uni-Prediction residual | 4 |
| Uni-Prediction skip | 5 |
| Bi-prediction residual | 6 |
| Bi-prediction skip | 7 |

Returning to FIGS. 4 and 5, samples filtered by the DBF 405 and the NNLF 410 are blended together via the following equation, where $R_{NN}$ and $R_{DB}$ refer to the outputs of NN filtering and deblocking filtering respectively, while w stands for the blending weight.

$$R_{Refine} = w \times R_{NN} + (1-w) \times R_{DB}$$

In one example, blending weight may be provided as 1, 0.75, 0.5, or adaptive weight. The adaptive weight may be derived using least square method and signaled for each color component in the slice header.

When a NNLF 410 is being applied to reconstructed pictures, a residual offset value is selected and signaled for each color component in the slice header. The offset value candidates are, for example, {1, 2}. The residual of NNLF's 500 output is adjusted by reducing the magnitude of the residual at each pixel by this small offset value before being added to input samples.

Prediction quality of neural network models depends on the inputs provided to the neural network models. While more inputs may result in higher prediction quality, this may not always be true. For example, certain inputs may result in noisy predictions. Prediction quality for the NNLF 410 may be improved by providing additional selective inputs. In one example, the additional inputs include motion vectors or phase of the interpolation filter, primary/secondary transform and index (for example, MTS index, LFNST index, etc.) and usage of transform skip, usage of screen content coding tools, palette mode, IBC, Intra TMP, non-directional luma modes (EIP, MIP, PDP), new chroma modes, and temporal identifier.

In one example, the NNLF 410 receives as an input motion vectors and/or phase of the interpolation filter for the reconstructed video frame. As noted above, motion vectors are determined for each frame and coded into the bitstream. In some examples, an interpolation filter may also be used along with motion vectors to reconstruct sub-blocks. The interpolation filter may have a length of, for example, 8 samples, 12 samples, or the like. The interpolation filter may have 16 phases with phase 0 corresponding to integer pixel precision. Each prediction also includes horizontal and vertical filters. Each block may include 2 predictions. Based on the above, the input to the NNLF 410 may signal 4 phases per block. In one example, only the integer phase filter may be signaled to simplify signaling. Table 2 below shows an example of the simplified interpolation filter signaling.

**TABLE 2:** Example Phase of Interpolation Filter Signaling

| TYPE OF INTERPOLATION FILTER | VALUE |
|---|---|
| All predictions have integer phase | 0 |
| At least one prediction has a sub-pixel prediction | 1 |

In one example, the NNLF 500 receives as input a transform setting used with the reconstructed video frame. For example, information relating to the primary or secondary transform, the transform index, and/or the usage of transform skip is provided as an input for the NNLF 410. Transforms may be used during intra-prediction or inter-prediction. The transforms include, for example, Multiple Transform Set (MTS), Non-Separable Primary Transform (NSPT), Low-Frequency Non-Separable Transform (LFNST), or the like kernels. For MTS, Direct Sine Transform 7 (DST7) and Direct Cosine Transform 8 (DCT8) kernels may be used. The primary transforms for a given block that are input to the NNLF 410 may include, DCT2xDCT2, Transform skip, and the 4 combinations of MTS (that is, DST7xDST7, DST7xDCT8, DCT8xDST7, DCT8xDCT8). When LNFST is enabled for the DCT2XDCT2 transform, the index of the LNFST may also be provided as an input. Table 3 below shows an example of the transform signaling.

**TABLE 3:** Example Transform Signaling

| TYPE OF TRANSFORM | VALUE |
|---|---|
| No residual | 0 |
| Transform Skip | 1 |
| DCT2xDCT2 | 2 |
| DCT2xDCT2, LFNST (lfnstIdx 0) | 3 |
| DCT2xDCT2, LFNST (lfnstIdx 1) | 4 |
| DCT2xDCT2, LFNST (lfnstIdx 2) | 5 |
| DCT2xDCT2, LFNST (lfnstIdx 3) | 6 |
| DST7xDST7 | 7 |
| DCT8xDST7 | 8 |
| DST7xDCT8 | 9 |
| DCT8xDCT8 | 10 |

The above input may be simplified by merging LNFST indices and primary transforms as shown in Table 4 below.

**TABLE 4:** Example Simplified Transform Signaling

| TYPE OF TRANSFORM | VALUE |
|---|---|
| No residual | 0 |
| Transform Skip | 1 |
| DCT2xDCT2 | 2 |
| DCT2xDCT2 + LFNST | 3 |

(continued)

| TYPE OF TRANSFORM | VALUE |
|---|---|
| DST7 / DCT8 | 4 |

In another example, for a give block, the use of LFNST or NPST may also be indicated using different values. LFNST and NPST may share the same index belonging to {0, 1, 2, 3}. However, LFNST and NPST may not be used together depending on the shape of the current block. For a given $w$ x $h$ block, NPST is used when $w$ x $h \in$ {4x4, 8x4, 4x8, 8x8, 4x16, 16x4, 8x16, 16x8, 4x32, 32x4, 8x32, 32x8}. For this example, Table 5 below shows the transform signaling.

**TABLE 5:** Example Transform Signaling

| TYPE OF TRANSFORM | VALUE |
|---|---|
| No residual | 0 |
| Transform Skip | 1 |
| DCT2xDCT2 | 2 |
| DCT2xDCT2, LFNST (lfnstIdx 0) | 3 |
| DCT2xDCT2, LFNST (lfnstIdx 1) | 4 |
| DCT2xDCT2, LFNST (lfnstIdx 2) | 5 |
| DCT2xDCT2, LFNST (lfnstIdx 3) | 6 |
| NSPT (lfnstIdx 0) | 7 |
| NSPT (lfnstIdx 1) | 8 |
| NSPT (lfnstIdx 2) | 9 |
| NSPT (lfnstIdx 3) | 10 |
| DST7xDST7 | 11 |
| DCT8xDST7 | 12 |
| DST7xDCT8 | 13 |
| DCT8xDCT8 | 14 |

The above input may be simplified by merging LNFST indices, NSPT indices, and primary transforms as shown in Table 6 below.

**TABLE 6:** Example Simplified Transform Signaling

| TYPE OF TRANSFORM | VALUE |
|---|---|
| No residual | 0 |
| Transform Skip | 1 |
| DCT2xDCT2 | 2 |
| DCT2xDCT2 + LFNST | 3 |
| DCT2xDCT2 + NSPT | 4 |
| DST7 / DCT8 | 5 |

In yet another example, the transform set may be expanded by including DCT2xDST7 and DST7xDCT2. For a given luma Coding Block (CB) predicted in intra and selecting Intra Sub-Partition (ISP) for prediction, when LFNST is not selected, the DCT2 horizontal may be replaced by the DST7 horizontally when $w \in$ {4, 8, 16} and DCT2 vertically may be replaced by the DST7 vertically when $h \in$ {4, 8, 16}. For a luma CB, $w$ and $h$ denote the width and heigh respectively of the luma Transform Block (TBs) corresponding to the luma CB. For this example, Table 5 below shows the transform signaling.

**TABLE 7:** Example Transform Signaling

| TYPE OF TRANSFORM | VALUE |
|---|---|
| No residual | 0 |
| Transform Skip | 1 |
| DCT2xDCT2 | 2 |
| DCT2xDCT2, LFNST (lfnstIdx 0) | 3 |
| DCT2xDCT2, LFNST (lfnstIdx 1) | 4 |
| DCT2xDCT2, LFNST (lfnstIdx 2) | 5 |
| DCT2xDCT2, LFNST (lfnstIdx 3) | 6 |
| NSPT (lfnstIdx 0) | 7 |
| NSPT (lfnstIdx 1) | 8 |
| NSPT (lfnstIdx 2) | 9 |
| NSPT (lfnstIdx 3) | 10 |
| DST7xDST7 | 11 |
| DCT8xDST7 | 12 |
| DST7xDCT8 | 13 |
| DCT8xDCT8 | 14 |
| DCT2xDST7 | 15 |
| DST7xDCT2 | 16 |

In one example, the NNLF receives as input a prediction setting used with reconstructed video frame. For example, the use of screen content tools, intra prediction modes, and/or inter prediction modes supplementing the IBP 530 may be provided to the NNLF 410 as predictions setting input. The screen content tools may include additional tools, for example, Intra Template Matching Prediction (Intra TMP) tool, and Palette mode as further described below. Table 8 shows an example screen content tools signaling.

**TABLE 8:** Screen Content Tool Signaling

| TYPE OF BLOCK | VALUE |
|---|---|
| Intra | 0 |
| IBC / Intra TMP | 1 |
| Uni-prediction | 2 |
| Bi-prediction | 3 |
| Palette | 4 |

Intra template matching prediction (IntraTMP) is a special intra prediction mode that copies the best prediction block from a reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

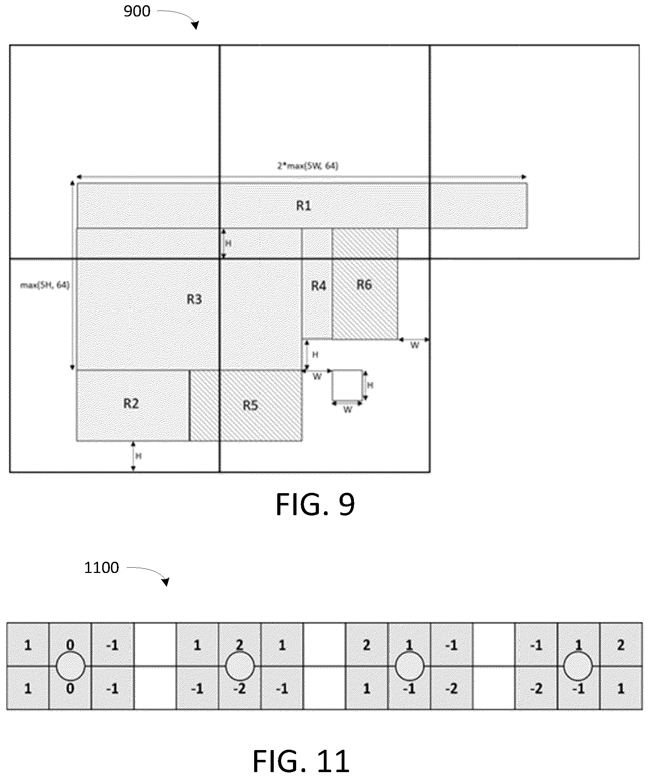

FIG. 9 illustrates an IntraTMP process 900. A prediction signal is generated by matching the L-shaped, Top-only or Left-only casual neighbor of the current block with another block in a predefined search area. In the example of FIG. 9, there are six predefined search areas, that is, R1 to R6 which contain the reconstructed samples from the top and left CTUs and part of the reconstructed samples within the current CTU that are located above, left, bottom-left, and top-right to the current block. To speed-up the template matching process, the search range of all search regions is subsampled by a factor of 4. After finding the best match, a refinement process is performed. The refinement is done via a second template matching search around the best match with a reduced range. The Intra template matching tool may be enabled for CUs with size less than or equal to 64 in width and height by default. This maximum CU size for Intra template matching may be configurable. The Intra template matching prediction mode is signaled at CU level through a dedicated flag when Decoder Side Intra Mode Derivation (DIMD) is not used for current CU.

In one example, luma and chroma mode information may also be provided to the NNLF 410. These modes include Extrapolation filter-based Intra Prediction (EIP), Matrix based position dependent intra prediction (PDP), Convolutional Cross-Component Model (CCCM), and/or Gradient-based Linear Model (GLM). EIP and PDP may represent luma modes and may be more textured (that is, matrix based) than regular directional prediction. That is, EIP and PDP represent matrix based intra prediction. CCCM and GLM may represent chroma modes (for example, cross component mode) and may be different from regular directional chroma modes (that is, regular chroma modes). Table 9 below illustrates an example luma mode information signaling and Table 10 below illustrates an example chroma mode information signaling.

**TABLE** 9: Example Luma Mode Information Signaling

| TYPE OF BLOCK | VALUE |
|---|---|
| Regular intra mode | 0 |
| Matrix based intra prediction | 1 |

**TABL 10:** Example Chroma Mode Information Signaling

| TYPE OF BLOCK | VALUE |
|---|---|
| Regular chroma mode | 0 |
| Cross component mode | 1 |
| Direct Block Vector | 2 |

CCCM is applied to predict chroma samples from reconstructed luma samples in a similar way as done by current Cross-Component Linear Model modes. The reconstructed luma samples are downsampled to match the lower resolution chroma grid when chroma subsampling is used. Top, Left, or Top and Left reference samples may be used as templates for model derivation. A convolutional filter may be used for the CCCM. The convolutional filter is a 7-tap filter having a 5-tap plus sign shape spatial component, a nonlinear term, and a bias term. The input 1000 to the spatial 5-tap component of the filter consists of a center (C) luma sample which is collocated with the chroma sample to be predicted and its above/north (N), below/south (S), left/west (W) and right/east (E) neighbors as illustrated in FIG. 10.

The non-linear term P is represented as power of two of the center luma sample C and scaled to the sample value range of the content: $P = (C*C + midVal) >> bitDepth$. This is for 10-bit contend, P is calculated as: $P = (C*C + 512) >> 10$. The bias term B represents a scalar offset between the input and the output (similarly to the offset term in CCLM) and is set to middle chroma value (512 for 10-bit content). Output of the convolutional filter is calculated as a convolution between the filter coefficients $c_i$ and the input values are clipped to the range of valid chroma samples: $predChromaVal = c_0C + c_1N + c_2S + c_3E + c_4W + c_5P + c_6B$. The filter coefficients $c_i$ are calculated by minimizing the mean square error (MSE) between predicted and reconstructed chroma samples in the references area. The MSE minimization is performed by calculating autocorrelation matrix from the luma input and a cross-correlation vector between the luma input and chroma output. Autocorrelation matrix is LDL decomposed and the final filter coefficients are calculated using back-substitution.

GLM method can be used for YUV 4:2:0 color format to predict chroma samples from luma sample gradients. Two modes may be supported for the GLM method: a two-parameter GLM mode and a three-parameter GLM mode. Compared with the CCLM, the GLM uses luma sample gradients to derive the linear model instead of down-samples luma values. When the two parameter GLM is applied, the input to the CCLM process, that is, the downsampled luma samples $L$, are replaced by luma sample gradients $G$. The other parts of CCLM (for example, parameter derivation, prediction sample linear transform) may be kept unchanged. $C = \alpha.G + \beta$.

In the three-parameter GLM, chroma sample can be predicted based on both the luma sample gradients and down sampled luma values with different parameters. The model parameters of the three-parameter GLM are derived from 6 rows and columns adjacent samples by the LDL decomposition based MSE minimization method as used in the CCCM. $C = \alpha_0.G + \alpha_1.L + \alpha_2.\beta$. For signaling, when the CCLM mode is enabled to the current CU, one flag is signaled to indicate whether GLM is enabled for both Cb and Cr components; if the GLM is enabled, another flag is signaled to indicate which of the two GLM modes is selected and one syntax element is further signaled to select one of 4 gradient filters for the gradient calculation. FIG. 11 illustrates example gradient filters 1100 for gradient calculation.

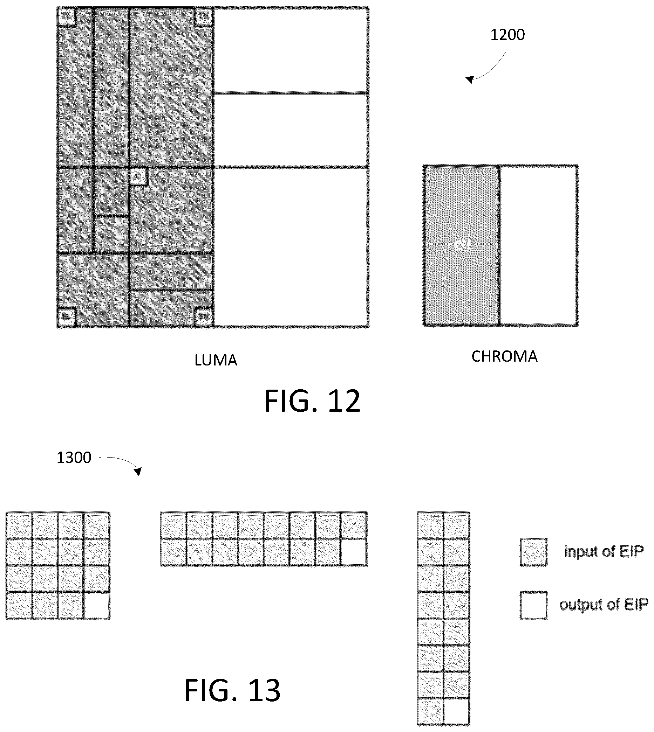

A direct block vector (DBV) may also be used for chroma blocks. FIG. 12 illustrates a DBV process 1200. A flag is signaled to indicate whether a chroma block is coded using IBC mode. When one of the luma blocks in five locations shown in FIG. 12 is coded with IBC or intraTMP mode, the block vector corresponding to the luma block is scaled and is used as block vector for the chroma block. Template matching is used to perform block vector scaling.

The extrapolation filter-based intra prediction (EIP) is processed in three steps. First, the extrapolation filter coefficients are derived from a neighboring reconstructed area of the current block or inherited from a previous EIP block. Second, the extrapolation process generates predicted signals from the top-left to bottom-right corner within the current block. Third, an intra prediction angle is derived by analyzing the gradient of the predicted block, and then the corresponding intra-mode is used to select the Multiple Transform Set (MTS), Non-Separable Primary Transform (NSPT) and Low-Frequency Non-Separable Transform (LFNST) kernel for transformation.

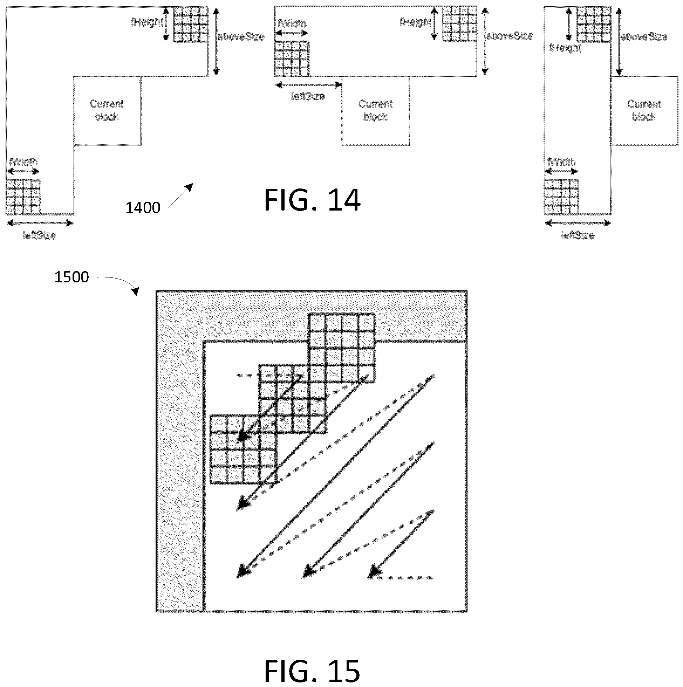

In one example, the filter coefficients are derived from the neighboring reconstructed pixels. In another example, the filter coefficients are inherited from the previously decoded blocks. The decoder decodes the relevant syntax elements to determine the selected type of reconstructed area and the filter shape for the current block. The selected filter moves in the selected reconstructed area either horizontally or vertically with a one-pixel step to construct the auto-correlation matrix and the cross-correlation vector. The calculation of coefficients from the auto-correlation matrix and the cross-correlation vector is similar as that in CCCM. FIG. 13 illustrates three IP filter shapes 1300 that may be used, and FIG. 14 illustrates three types of reconstructed areas 1400. The EIP mode generates prediction values for the current block from the top-left position to the bottom-right position by a diagonal prediction order 1500, as shown in FIG. 15. Prediction values may be calculated using:

$$pred_{(x,y)} = \sum_{i=0}^{14} \left( c_i \times t_{(x-offsetX_i, y-offsetY_i)} \right)$$

where $pred_{(x,y)}$ is the predicted value at (x, y) in the current block, $c_i$ is the $i^{th}$ coefficient of the selected EIP filter, the index of the coefficients is from 0 to 14, $t_{(x-offsetX_i, y-offsetY_i)}$ is a reconstructed or a predicted value used for the current position's prediction. $offsetX_i$ and $offsetY_i$ are the position offsets to the current position.

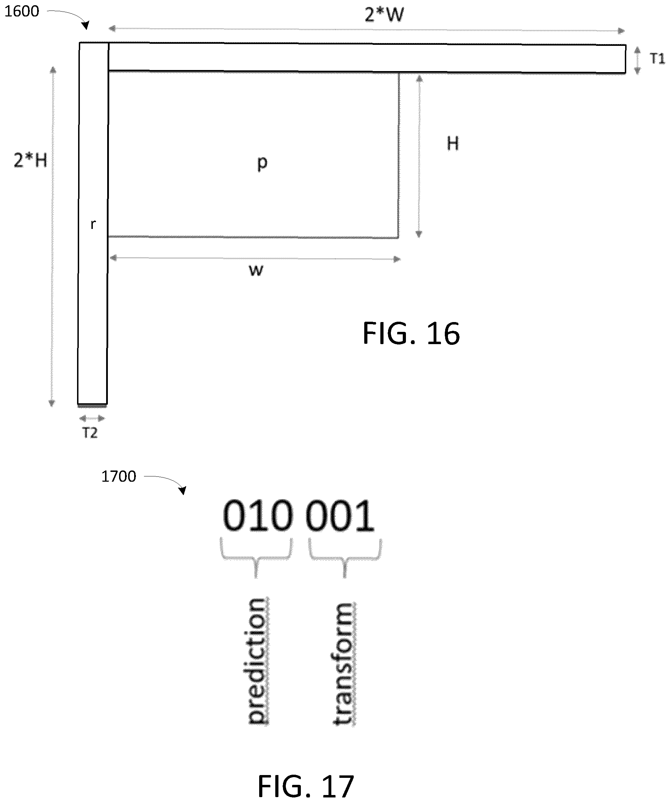

The matrix based intra prediction replaces some directional intra modes where the weights are intra mode and block shape dependent which are applied to L shaped causal template to generate final prediction. The weights are applied to the reference samples of the L shaped causal neighborhood template 1600 as shown in FIG. 16. The reference samples in the causal neighborhood are denoted as r, and F(x,y) is the matrix of weights. Then the prediction P(x,y) can be derived as P(x,y) = Σk F(x,y,k)*r(k), where k denotes the index of the reference sample in the template.

In one example, the NNLF 410 receives as an input an indication of whether Reference Picture Resampling (RPR) is applied to the current frame (that is, the reconstructed video frame). Tables 12 and 13 below show example signaling of the RPR to the NNLF 410.

**TABLE 11:** Example RPR Indication Signaling

| RPR APPLIED TO THE CURRENT FRAME | VALUE |
|---|---|
| false | 0 |
| true | 1 |

**TABLE 12:** Example RPR Indication Signaling

| RPR APPLIED TO THE CURRENT FRAME | VALUE |
|---|---|
| false | 1 |
| true | 0 |

The luma and chroma modes may be unified to indicate the prediction mode (for example, a prediction setting for the reconstructed video frame) as shown in Table 13 below.

**TABLE 13:** Example Unified Prediction Mode Signaling

| TYPE OF THE LUMA BLOCK | LUMA VALUE | TYPE OF THE CHROMA BLOCK | CHROMA VALUE |
|---|---|---|---|
| Regular Intra luma mode | 0 | Regular intra chroma mode | 0 |
| Matrix based intra prediction | 1 | Cross component mode | 1 |
| IBC / Intra TMP | 2 | Direct Block Vector/ IBC / intra TMP | 2 |

(continued)

| TYPE OF THE LUMA BLOCK | LUMA VALUE | TYPE OF THE CHROMA BLOCK | CHROMA VALUE |
|---|---|---|---|
| Uni-prediction | 3 | Uni-prediction | 3 |
| Bi-prediction | 4 | Bi-prediction | 4 |
| Palette | 5 | Palette | 5 |

The prediction mode information may be further combined with transform information (for example, a single input indicating the prediction setting and the transform setting used with the reconstructed video frame) as shown in Table 14 below.

| TYPE OF THE LUMA BLOCK | TRANSFORM TYPE | LUMA VALUE |
|---|---|---|
| Regular Intra luma mode | No residual | 0 |
| | Transform Skip | 1 |
| | DCT2xDCT2 | 2 |
| | DCT2xDCT2 + Lfnst | 3 |
| | DST7 / DCT8 | 4 |
| Matrix based intra prediction | No residual | 5 |
| | Transform Skip | 6 |
| | DCT2xDCT2 | 7 |
| | DCT2xDCT2 + Lfnst | 8 |

| | | | | |
|---|---|---|---|---|
| | DST7 / DCT8 | | 9 | |
| IBC / Intra TMP | No residual | | 10 | |
| | Transform Skip | | 11 | |
| | DCT2xDCT2 | | 12 | |
| | DCT2xDCT2 + Lfnst | | 13 | |
| | DST7 / DCT8 | | 14 | |
| Uni-prediction | No residual | | 15 | |
| | Transform Skip | | 16 | |
| | DCT2xDCT2 | | 17 | |
| | DCT2xDCT2 + Lfnst | | 18 | |
| | DST7 / DCT8 | | 19 | |
| Bi-prediction | No residual | | 20 | |
| | Transform Skip | | 21 | |
| | DCT2xDCT2 | | 22 | |
| | DCT2xDCT2 + Lfnst | | 23 | |
| | DST7 / DCT8 | | 24 | |
| Palette | | | 25 | |

**TABLE 14**: Example Prediction Mode and Transform Signaling

In one example, more weight may be given to certain types of information provided to the NNLF 410. For example, more information for the prediction can be given by multiplying prediction value by 8 (that is, shift by 3). Table 15 below shows the mapping with weights and FIG. 17 shows the resulting bit signal 1700 provided to the NNLF 410. Multiplying by 8 is equivalent to assigning 3 bits for prediction information and 3 bits for transform information. That is, the single input indicating the prediction setting and the transform setting includes 3 bits assigned for the prediction setting and e bits assigned for the transform setting. Taking the example of IBC with TransformSkip from Table 14, IBC is prediction mode 2, and TransformSkip is transform mode 1. In this example, IBC with transform skip has a value of 2*8 + 1 = 17 as shown in Table 15.

| TYPE OF THE LUMA BLOCK | TRANSFORM TYPE | | LUMA VALUE | |
|---|---|---|---|---|
| Regular Intra luma mode | No residual | | 0 | |
| | Transform Skip | | 1 | |

| | | | |
|---|---|---|---|
| | DCT2xDCT2 | | 2 |
| | DCT2xDCT2 + Lfnst | | 3 |
| | DST7 / DCT8 | | 4 |
| Matrix based intra prediction | No residual | | 8 |
| | Transform Skip | | 9 |
| | DCT2xDCT2 | | 10 |
| | DCT2xDCT2 + Lfnst | | 11 |
| | DST7 / DCT8 | | 12 |
| IBC / Intra TMP | No residual | | 16 |
| | Transform Skip | | 17 |
| | DCT2xDCT2 | | 18 |
| | DCT2xDCT2 + Lfnst | | 19 |
| | DST7 / DCT8 | | 20 |
| Uni-prediction | No residual | | 24 |
| | Transform Skip | | 25 |
| | DCT2xDCT2 | | 26 |
| | DCT2xDCT2 + Lfnst | | 27 |
| | DST7 / DCT8 | | 28 |
| Bi-prediction | No residual | | 32 |
| | Transform Skip | | 33 |
| | DCT2xDCT2 | | 34 |
| | DCT2xDCT2 + Lfnst | | 35 |
| | DST7 / DCT8 | | 36 |
| Palette | | | 40 |

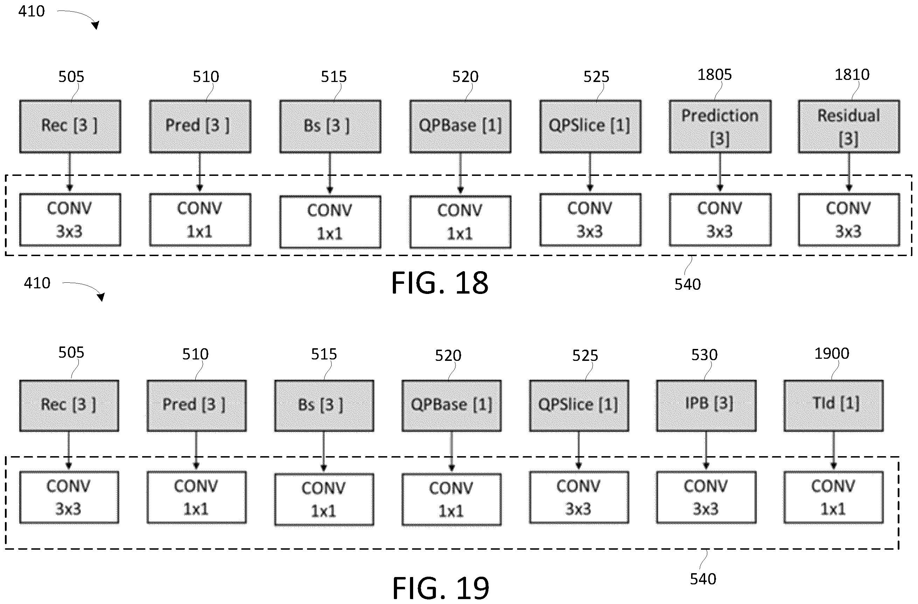

Concatenating the prediction mode information and transform information as noted above results in a simplified signaling method for providing information to the NNLF 410. Mixing the different types of information into a single map may lead giving more weight to some information. For examples, the transform information may lead to bigger coding artifact than prediction. However, when prediction mode information and transform information are provided together, prediction mode information may have a bigger influence. FIG. 18 shows example inputs provided to the header block 540 of the NNLF 410 where the prediction information and transform information are separated. The prediction mode information and the transform mode information are encoded in separate maps and provided as separate inputs to the NNLF 410. In the modified NNLF 410 of FIG. 18, the inputs include the reconstructed samples 505, the prediction samples 510, the boundary strength 515, the QPbase 520, the QP inputs 525, a prediction mode 1805, and a residual mode 1810. The prediction mode 1805 provides information relating to the type of block as noted in the above tables to the NNLF 410. The residual mode 1810 provides information relating to the transform as noted in the above tables to the NNLF 410.

In one example, the NNLF 410 receives as input an importance setting of the reconstructed video frame. For example, a temporal identifier (temporal id) of a frame is provided to the NNLF 410. FIG. 18 shows example inputs provided to the header block 540 of the NNLF 410 where the temporal id is provided as an input. Depending on the encoder group of pictures (GOP) structure, slice QP and block QP may be adaptively selected. Using temporal id may provide a good indication on the importance of a frame and how strong the in-loop filtering is to be done. Importance of the frame may be indicated using the nuh_temporal_id in the network abstraction layer (NAL) unit header syntax. For intra slices, the temporal id may be 0. In some examples, temporal id is the same for all slices (for example, 0). In this example, an alternative value may be provided as an input to the NNLF 410. For example, the temporal id of 3 may be set for inter frames. In one example, an index is computed depending on the number of reference frames used. In another example, an index is coded in the bitstream to signal a temporal id specifically for the in-loop filter. In the modified NNLF 410 of FIG. 19, the inputs include the reconstructed samples 505, the prediction samples 510, the boundary strength 515, the QPbase 520, the QP inputs 525, the IBP 530, and the temporal id 1900.

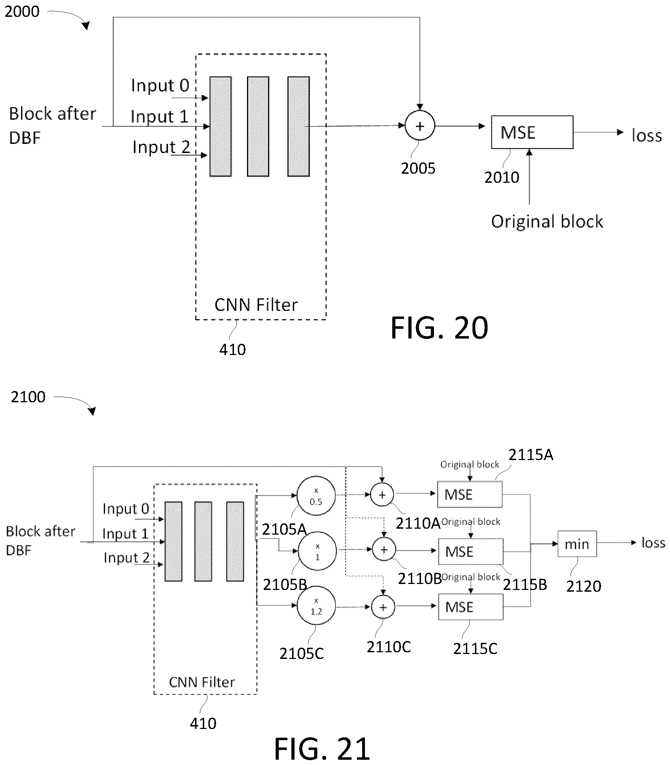

FIG. 20 illustrates an example training process 2000 for the NNLF 410. A large dataset of blocks (for example, reconstructed video frames) can be used to train the model of the NNLF 410 with input extracted from real encoding. The loss may be computed as a Mean Square Error (MSE) or Mean Absolute Error (MAE) and provided as feedback to the model. As shown in FIG. 20, a reconstructed video frame is provided to the NNLF 410. The output of the NNLF 410 is added to the input reconstructed video frame (at blending component 2005). The blended output is compared to the original block (for example, original video frame) to determine the mean square error or mean absolute error (at error block 2010). The error output of the error block 2010 denotes the loss during compression. The error output is provided as feedback to the model of the NNLF 410 to train the NNLF 410.

FIG. 21 illustrates an example training process 2100 for the NNLF 410 at different scales. As shown in FIG. 21, a reconstructed video frame is provided to the NNLF 410. The output of the NNLF 410 is scaled at different scaling factors (at scaling components 2105A, 2105B, and 2105C). The scaled outputs are added to the input reconstructed video frame (at blending components 2110A, 2110B, and 2110C). The blended outputs are compared to the original block (for example, original video frame) to determine the mean square error or mean absolute error (at error block 2115A, 2115B, and 2115C). A minimum of the error outputs of the error blocks 2115 determined at the minimum component 2120 denotes the loss during compression. The error output is provided as feedback to the model of the NNLF 410 to train the NNLF 410.

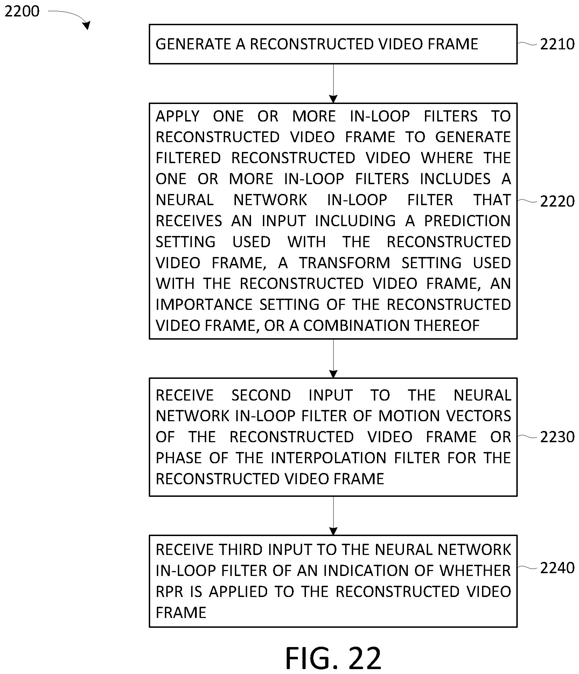

FIG. 22 illustrates a flowchart of an example method 2200 for filtering a reconstructed video frame. The method 2200 may be implemented by the encoder 200 and/or the decoder 300. The method 2200 includes generating, using at least one electronic processor, a reconstructed video frame (at block 2210). Referring to FIG. 2, in the encoder 200, the component 255 combines the decoded prediction residuals and the predicted block to reconstruct an image block (that is, the reconstructed video frame). The reconstructed video frame is provided as an input to the one or more in-loop filters 265 (that is, one or more in-loop filters 400, 500). Referring to FIG. 3, in the decoder 300, the component 355 combines the decoded prediction residuals and the predicted block to reconstruct an image block (that is, the reconstructed video frame). The reconstructed video frame is provided as an input to the one or more in-loop filters 365 (that is, one or more in-loop filters 400, 500).

Returning to FIG. 22, the method 2200 also includes applying one or more in-loop filters 400, 500 to the reconstructed video frame to generate a filtered reconstructed video where the one or more in-loop filters includes a neural network in-loop filter (that is, the NNLF 410) that receives an input including a prediction setting used with the reconstructed video frame, a transform setting used with the reconstructed video frame, an importance setting of the reconstructed video frame, or a combination thereof (at block 2220). The one or more loop filters 400, 500 filter the reconstructed video frame and provide the generated filtered reconstructed video frame to the reference picture buffers 280, 380 in the encoder 200 and the decoder 300 respectively, the one or more loop filters 400, 500 includes the NNLF 410. As discussed above, the NNLF receives as input a prediction setting used with the reconstructed video frame (for example, luma or chroma prediction modes), a transform setting used with the reconstructed video frame (for example, noresidual, transform skip, MTS, LFNST index, NSPT index, etc.), an importance setting of the reconstructed video frame (for example, a temporal id), or a combination thereof.

The method 2200 also optionally includes receiving a second input to the NNLF 410 of motion vectors of the reconstructed video frame or phase of the interpolation filter for the reconstructed video frame (at block 2230). The motion vectors and/or the phase of the interpolation filter may be provided as an input in addition to or in place of the prediction setting, the transform setting, and the importance setting. The method 2200 also optionally includes receiving a third input to the NNLF 410 of an indication of whether RPR is applied to the reconstructed video frame (at block 2240). The RPR indication may be provided as an input in addition to or in place of the motion vectors, the phase of the interpolation filter, prediction setting, the transform setting, and the importance setting.

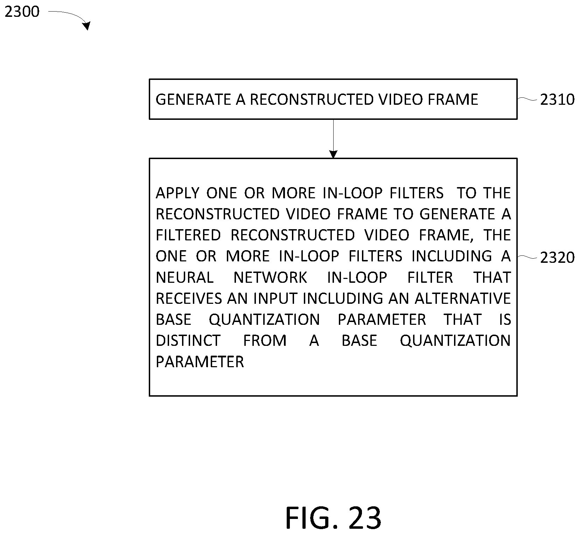

FIG. 23 illustrates a flowchart of an example method 2300 for filtering a reconstructed video frame. The method 2300 may be implemented by the encoder 200 and/or the decoder 300.

The method 2300 includes generating, using at least one electronic processor, a reconstructed video frame (at block 2310). Referring to FIG. 2, in the encoder 200, the component 255 combines the decoded prediction residuals and the predicted block to reconstruct an image block (that is, the reconstructed video frame). The reconstructed video frame is provided as an input to the one or more in-loop filters 265 (that is, one or more in-loop filters 400, 500). Referring to FIG. 3, in the decoder 300, the component 355 combines the decoded prediction residuals and the predicted block to reconstruct an image block (that is, the reconstructed video frame). The reconstructed video frame is provided as an input to the one or more in-loop filters 365 (that is, one or more in-loop filters 400, 500).

Returning to FIG. 23, the method 2300 also includes applying one or more in-loop filters (that is, in-loop filters 400, 500) to the reconstructed video frame to generate a filtered reconstructed video frame, the one or more in-loop filters including a neural network in-loop filter (that is, the NNLF 410) that receives an input including an alternative base quantization parameter that, as described in more detail below, is distinct from a base quantization parameter

(e.g., QPbase 520, as described above with respect to FIG. 6, which may also be referred to herein as a global quantization parameter) (at block 2320).

Additionally, in some examples, with respect to an encoder, the method 2300 may further include encoding the alternative base quantization parameter for the neural network in-loop filter in a bitstream. Additionally, in other examples, with respect to a decoder, the method 2300 may further include decoding the alternative base quantization parameter for the neural network in-loop filter from a bitstream.

It should be understood that for both the encoder and the decoder, the neural network in-loop filter (e.g., the NNLF 410) as used in the methods 2200 and 2300 may receive one or more inputs in addition to the alternative base quantization parameter. For example, the inputs to the neural network in-loop filter may also include one or more of the additional inputs illustrated in FIG. 6, FIGS. 18-19, or a combination thereof. Other inputs may also be used in some examples.

For example, quantization parameters per block (i.e., QPslice) may be separately computed for luma and chroma components. For example, when the component of a block contains a residual, for a luma component, the block quantization parameter is a quantization parameter predicted and added to dQP, where dQP is a difference signaled in the bitstream and the quantization parameter predicted is a prediction of the quantization parameter based on the quantization parameter of neighboring blocks. The prediction is initialized to the quantization parameter of the slice. When adaptive quantization parameter is off, the dQP is not signaled (infer to 0) so all the blocks get a quantization parameter equal to the QP slice.

Additionally, for example, when the component of a block contains a residual, for a chroma component, the block quantization parameter is equal to a base quantization parameter added to a first offset quantization parameter and added to a second offset quantization parameter. The base quantization parameter is the quantization parameter of the collocated luma that is used and mapped to deduce a base QP of the chroma using a lookup table (LUT), which can be signaled or fixed in the decoder. The first offset quantization parameter is signaled at picture parameter set (PPS) and optionally at slice level. When a Joint Cb Cr flag (this flag indicates that the Cb and Cr chroma residuals are jointly coded, only one residual is encoded and the other chroma residual is deduced from the first encoded residual (using the opposite of the first encoded residual)) is true, an alternative offset is used. Additionally, the second offset quantization parameter is an adjustment on the base quantization parameter, optionally signaled at block level, which is mapped to another QP offset. To compute the quantization parameter of the block, some clipping may be used to keep the value in the available range of quantization parameter.

In neural network based loop filtering or post filtering, it is common to input the quantization parameter of the slice or block (see input QP slice of FIGS. 6, 18, and 19). In an embodiment, the quantization parameter is input for all components of the block (luma and chroma). Depending on the coding tree, single tree or dual tree, the quantization parameter change in luma and chroma might not be synchronized.

Additionally, the quantization parameter values associated with some special cases may be adapted for the quantization parameter of the block. For example, when there is no residual (e.g., when coded block flag (cbf) is zero indicating that the block has a null residual), the quantization parameter of the block is deduced to the quantization parameter that would have been used to encode a residual (i.e., using the same process to compute the quantization parameter of the block as when a residual is present,). However, some steps may be implicit. First, the dQP may be assumed to be zero, such that the quantization parameter of the block is the predicted quantization parameter. In chroma, it may be assumed that no quantization parameter adjustment is transmitted, and the quantization parameter of the block is deduced from the base quantization parameter and offset quantization parameter.

Alternatively, the quantization parameter of the chroma are merged and the average value of the quantization parameter of each of the chroma components is used. The average value of the quantization parameter allows a reduction of the number of inputs to the filter (e.g., to two channels instead of three channels).

For neural network based loop filtering or post filtering, a training of the model is required in order to adapt to the input. In this instance, the training procedure is the same as before, only the nature of the input, specifically, the base quantization parameter is changing to an alternative quantization parameter.

In neural network based loop filtering or post filtering, the base quantization parameter may be the quantization parameter of the sequence, as signaled in the PPS (see input QP base in FIGS. 6, 18, and 19). This QP base (referred to herein as the "base quantization parameter," "global quantization parameter," "QP base," or "QP global" interchangeably) may be further adjusted by the encoder and/or the decoder to modulate the correction of the neural network. The adjustment (offset) is then signaled in the bitstream at slice or block level. However, such quantization parameter value setting is not constrained at encoder side. An encoder may choose any policy to set the QP global. Accordingly, the methods 2200 and 2300 as described herein replace the QP global information (i.e., replace QP base signaled in the PPS) with an alternative base quantization parameter that is used to assess the target quality of the sequence and also to determine the temporal level of a frame when compared to the slice level quantization parameter.

In some examples, the alternative base quantization parameter is a temporal identifier (ID) (also referred to as "TID") level of the reconstructed video frame (referred to herein as a "first alternative base quantization parameter" to distinguish from other example parameters described herein). Typically, the level is zero for intra frame or the first coded B frame. The TID level is then increased, depending on the dependency of the current reconstructed video frame to other previously reconstructed video frames. Typically, this TID level assesses the number of times a sample might have been filtered through the different temporal prediction. A quantizer may be associated with the TID value (for example, 16), to normalize the input value.

In other examples, the input TID value is first multiplied by an adjustment factor, for example, 2, to allow an encoder to more finely adjust the model behavior. Additionally, in these examples, the encoder may also add an offset on the input TID value to further adjust the model behavior.

The input value may be filled as a constant component with a tensor of depth 1. For example, the value v to fill the tensor may be v= TID*2+offset, where offset is an offset signaled by slice or block to adjust the TID. Accordingly, in various examples, data signaled in the encoded bitstream as the alternative base quantization parameter may include the TID value, the associated adjustment factor, the offset, or a combination thereof. For example, as the TID may already be signaled in the bitstream (e.g., in a separate channel for the in-loop filters), only the offset and/or the adjustment factor may be signaled. Similarly, in some embodiments, the adjustment factor may be defined in the decoder as a default value, and, thus, may not be signaled.

In some examples, the alternative quantization parameter is the difference between the quantization parameter of the current slice and the quantization parameter of the first frame of a group of pictures (GOP) (referred to herein as a "second alternative quantization parameter"). For a random access configuration, the first frame of the GOP corresponds to an Intra coded frame. In other examples, an offset may be added, and signaled, on top of the difference to further modulate the correction of the loop-filter.

In some examples, the alternative quantization parameter is an objective quality metric of the reconstructed video frame (referred to herein as a "third alternative quantization parameter"). The objective quality metric allows the encoder and/or decoder to learn how much correction should be done on the frame. The objective quality metric is computed by the encoder and/or decoder using the original frame and the reconstructed frame (for example, the output of the Deblocking filter (DBF) or sample offset adjustment (SAO) process). In some examples, the objective quality metric is a peak signal-to-noise ratio (PSNR) between the original and the reconstructed frame. Other suitable objective quality metrics may be MSE (Mean Square Error) or multi-scale structural similarity index measure (MS-SSIM). Each of the objective quality metrics may be normalized before being input to the model (the "model" with respect to the neural network loop filter). Typically, the PSNR score is normalized (e.g., by one hundred and twenty-eight) to get an input roughly between zero and one.

In some examples, the alternative quantization parameter is a number of times the reconstructed video frame has undergone filtering (referred to herein as a "fourth alternative quantization parameter"). As previously noted, this value is closely related to the TID value.

For example, for the first intra frame, n is equal to zero. Additionally, for the first inter frame, n is equal to one because the frame will use the intra frame already filtered to predict the current frame. For the next inter frame, n is equal to two because the encoder and/or decoder uses the first inter frame, already filtered, to predict the current reconstructed video frame. The same logic applies to subsequent frames.

In some examples, the alternative quantization parameter is a distance, in POC, to the closest reference frame used to reconstruct the current video frame (referred to herein as a "fifth alternative quantization parameter"). For an intra coded frame, the distance is fixed to an arbitrary high value, for example, sixty-four. For a GOP of size thirty-two, the first inter coded frame, at POC thirty-two, will have a distance of thirty-two. The second inter coded frame, at POC sixteen, will have a distance of sixteen, etc. As for other input values, the values may be first normalized, typically with a normalizer of sixty-four, before being input to the model (the "model" with respect to the neural network loop filter).

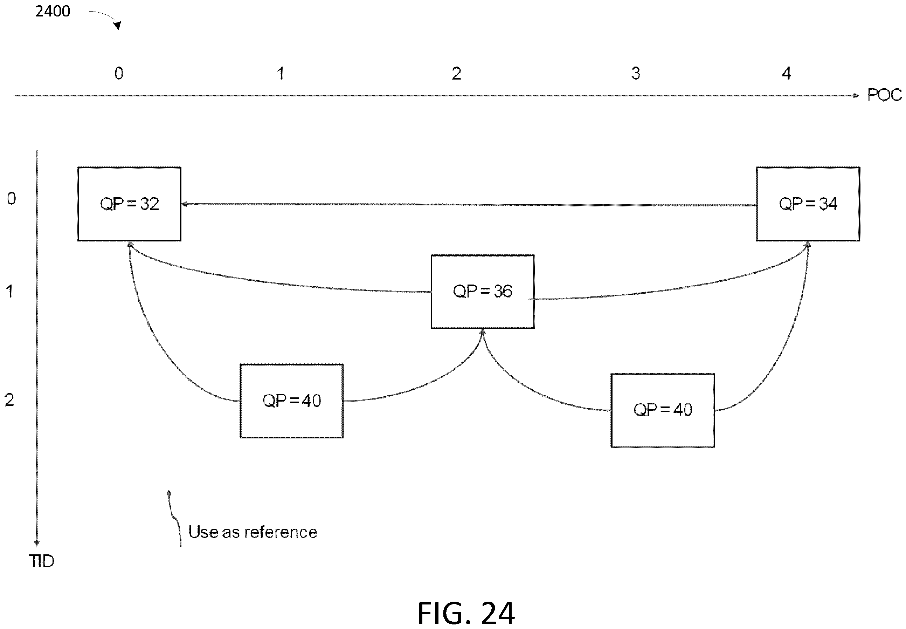

FIG. 24 is diagram illustrating an example 2400 of the fifth alternative quantization parameter. The figure illustrates the relationship between TiD, frame quality, POC and a number of filtering for a particular GOP structure. For low TiD, the quantization parameter is usually smaller (because the frame will be used more in the GOP as a reference), hence quality is higher. The number of filtering is higher for higher TiD because the samples are coming from a frame which has itself been filtered. For lower TiD, the reference frame distance is usually higher.

In some examples, the alternative quantization parameter uses an offset on the QP slice or QP block input (referred to herein as a sixth alternative quantization parameter). Previously, an offset was optionally added to the base quantization parameter to modulate the correction computed by the loop-filter. This offset is signaled by the encoder to the decoder. In some examples, the sixth alternative quantization parameter adapts the modulation of the network by using an offset on the QP slice or QP block input. For this sixth alternative quantization parameter, the QPbase input may be freed up for other use.

In these examples, the sixth alternative quantization parameter may also be input by component, as described above. In other examples, the sixth alternative quantization parameter may be a single quantization parameter offset that is sent and applied to all components of the input. In yet other examples, two quantization parameter offsets may be sent, one quantization parameter offset for the luma component and the other quantization parameter offset for the two chroma components. Additionally, in some examples, an offset for each chroma component may be signaled instead of the other quantization parameter offset for the two chroma components.

Lastly, although the various alternative quantization parameters are described individually, the various alternative quantization parameters are not limited to an individual application and may be combined together into an overall alternative quantization parameter. When more than one alternative quantization parameter is used (or when the encoder selects one or more applicable alternative quantization parameters from available parameters, such as, based on costs, quality requirements, rate requirements, etc.), the encoder may be configured to signal which inputs correspond to which alternative quantization parameters. Also, when more than one alternative quantization parameter is used, the parameters may be provided in discrete channels, combined in one or more channels, or a combination thereof.

The following are enumerated examples of the methods, devices, and non-transitory computer-readable media of the present application. Example 1: a method for filtering a reconstructed video frame, the method comprising: generating the reconstructed video frame; and applying one or more in-loop filters to the reconstructed video frame to generate a filtered reconstructed video frame, the one or more in-loop filters including a neural network in-loop filter that receives an input including an alternative base quantization parameter that is distinct from a base quantization parameter.

Example 2: the method of Example 1, wherein the alternative base quantization parameter includes one of: a temporal identifier level of the reconstructed video frame, and wherein the temporal identifier level indicates a dependency of the reconstructed video frame to other previously reconstructed video frames, an offset to adjust the temporal identifier level, or a combination thereof.

Example 3: the method of Example 2, wherein the temporal identifier level of the reconstructed video frame is further multiplied by an adjustment factor.

Example 4: the method of any of Examples 1-3, wherein the alternative base quantization parameter includes a difference between a quantization parameter of a current slice of the reconstructed video frame and a first frame of a group of pictures.

Example 5: the method of Example 4, wherein the first frame of the group of pictures corresponds to an Intra coded frame.

Example 6: the method of Example 4, wherein the alternative base quantization parameter further includes an offset to the difference.

Example 7: the method of any of Examples 1-6, further comprising: computing an objective quality metric of the reconstructed video frame based on an original video frame and the reconstructed video frame, wherein the alternative base quantization parameter includes the objective quality metric.

Example 8: the method of Example 7, wherein computing the objective quality metric of the reconstructed video frame based on the original video frame and the reconstructed video frame further includes normalizing the objective quality metric.

Example 9: the method of Example 8, wherein the objective quality metric is one of peak signal-to-noise ratio (PSNR), Mean Square Error (MSE), or multi-scale structural similarity index measure (MS-SSIM).

Example 10: the method of any of Examples 1-9, further comprising: determining a value indicating an amount of filtering of the reconstructed video frame, wherein the alternative base quantization parameter includes the value indicating the amount of filtering.

Example 11: the method of any of Examples 1-10, further comprising: determining a value indicating an amount of filtering of the reconstructed video frame, wherein the alternative base quantization parameter includes the value indicating the amount of filtering.

Example 12: the method of any of Examples 1-11, further comprising: determining a distance between the reconstructed video frame and a closest reference frame, wherein the alternative base quantization parameter includes the distance between the reconstructed video frame and a closest reference frame.

Example 13: the method of any of Examples 1-12, further comprising: determining a distance between the reconstructed video frame and a closest reference frame; and normalizing the distance between the reconstructed video frame and the closest reference frame, wherein the alternative base quantization parameter includes the distance that is normalized.

Example 14: the method of any of Examples 1-13, wherein the alternative base quantization parameter includes one of: a slice quantization parameter and an offset to the slice quantization parameter, or a block quantization parameter and an offset to the block quantization parameter.

Example 15: the method of any of Examples 1-14, wherein the alternative base quantization parameter includes one of: a single quantization parameter offset that is applied to all components of the input, two quantization parameter offsets, wherein a first quantization parameter is applied to a luma component of the input and a second quantization parameter is applied to chroma components of the input, and three quantization parameter offsets, wherein a third quantization parameter is applied to the luma component of the input, a fourth quantization parameter is applied to a first chroma component of the input, and a fifth quantization parameter is applied to a second chroma component of the input.

Example 16: a device comprising: an encoder configured to: generate the reconstructed video frame, and apply one or more in-loop filters to the reconstructed video frame to generate a filtered reconstructed video frame, the one or more in-loop filters including a neural network in-loop filter that receives an input including an alternative base quantization parameter that is distinct from a base quantization parameter.

Example 17: the device of Example 16, wherein the alternative base quantization parameter includes one of: a temporal identifier level of the reconstructed video frame, and wherein the temporal identifier level indicates a dependency of the reconstructed video frame to other previously reconstructed video frames, an offset to adjust the temporal identifier level, or a combination thereof.

Example 18: the device of Example 17, wherein the temporal identifier level of the reconstructed video frame is further multiplied by an adjustment factor.

Example 19: the device of any of Examples 16-18, wherein the alternative base quantization parameter includes a difference between a quantization parameter of a current slice of the reconstructed video frame and a first frame of a group of pictures.

Example 20: the device of Example 19, wherein the first frame of the group of pictures corresponds to an Intra coded frame.

Example 21: the device of Example 19, wherein the alternative base quantization parameter further includes an offset to the difference.

Example 22: the device of any of Examples 16-21, wherein the encoder is further configured to: compute an objective quality metric of the reconstructed video frame based on an original video frame and the reconstructed video frame, wherein the alternative base quantization parameter includes the objective quality metric.

Example 23: the device of Example 22, wherein, to compute the objective quality metric of the reconstructed video frame based on the original video frame and the reconstructed video frame, the encoder is further configured to normalize the objective quality metric.

Example 24: the device of Example 23, wherein the objective quality metric is one of peak signal-to-noise ratio (PSNR), Mean Square Error (MSE), or multi-scale structural similarity index measure (MS-SSIM).

Example 25: the device of any of Examples 16-24, wherein the encoder is further configured to: determine a value indicating an amount of filtering of the reconstructed video frame, wherein the alternative base quantization parameter includes the value indicating the amount of filtering.

Example 26: the device of any of Examples 16-25, wherein the encoder is further configured to: determine a value indicating an amount of filtering of the reconstructed video frame, wherein the alternative base quantization parameter includes the value indicating the amount of filtering.

Example 27: the device of any of Examples 16-26, wherein the encoder is further configured to: determine a distance between the reconstructed video frame and a closest reference frame, wherein the alternative base quantization parameter includes the distance between the reconstructed video frame and a closest reference frame.

Example 28: the device of any of Examples 16-27, wherein the encoder is further configured to: determine a distance between the reconstructed video frame and a closest reference frame; and normalize the distance between the reconstructed video frame and the closest reference frame, wherein the alternative base quantization parameter includes the distance that is normalized.

Example 29: the device of any of Examples 16-28, wherein the alternative base quantization parameter includes one of: a slice quantization parameter and an offset to the slice quantization parameter, or a block quantization parameter and an offset to the block quantization parameter.

Example 30: the device of any of Examples 16-29, wherein the alternative base quantization parameter includes one of: a single quantization parameter offset that is applied to all components of the input, two quantization parameter offsets, wherein a first quantization parameter is applied to a luma component of the input and a second quantization parameter is applied to chroma components of the input, and three quantization parameter offsets, wherein a third quantization parameter is applied to the luma component of the input, a fourth quantization parameter is applied to a first chroma component of the input, and a fifth quantization parameter is applied to a second chroma component of the input.

Example 31: a non-transitory computer-readable medium comprising instructions that, when executed by an electronic processor, causes the electronic processor to perform a set of operations, the set of operation comprising: generating the reconstructed video frame; and applying one or more in-loop filters to the reconstructed video frame to generate a filtered reconstructed video frame, the one or more in-loop filters including a neural network in-loop filter that receives an input including an alternative base quantization parameter that is distinct from a base quantization parameter.

Example 32: the non-transitory computer-readable medium of Example 31, wherein the alternative base quantization parameter includes one of: a temporal identifier level of the reconstructed video frame, and wherein the temporal identifier level indicates a dependency of the reconstructed video frame to other previously reconstructed video frames, an offset to adjust the temporal identifier level, or a combination thereof.

Example 33: the non-transitory computer-readable medium of Example 32, wherein the temporal identifier level of the reconstructed video frame is further multiplied by an adjustment factor.

Example 34: the non-transitory computer-readable medium of any of Examples 31-33, wherein the alternative base quantization parameter includes a difference between a quantization parameter of a current slice of the reconstructed video frame and a first frame of a group of pictures.

Example 35: the non-transitory computer-readable medium of Example 34, wherein the first frame of the group of pictures corresponds to an Intra coded frame.

Example 36: the non-transitory computer-readable medium of Example 34, wherein the alternative base quantization parameter further includes an offset to the difference.

Example 37: the non-transitory computer-readable medium of any of Examples 31-36, wherein the set of operations further includes: computing an objective quality metric of the reconstructed video frame based on an original video frame and the reconstructed video frame, wherein the alternative base quantization parameter includes the objective quality metric.

Example 38: the non-transitory computer-readable medium of Example 37, wherein computing the objective quality metric of the reconstructed video frame based on the original video frame and the reconstructed video frame further includes normalizing the objective quality metric.

Example 39: the non-transitory computer-readable medium of Example 38, wherein the objective quality metric is one of peak signal-to-noise ratio (PSNR), Mean Square Error (MSE), or multi-scale structural similarity index measure (MS-SSIM).

Example 40: the non-transitory computer-readable medium of any of Examples 31-39, wherein the set of operations further includes: determining a value indicating an amount of filtering of the reconstructed video frame, wherein the alternative base quantization parameter includes the value indicating the amount of filtering.

Example 41: the non-transitory computer-readable medium of any of Examples 31-40, wherein the set of operations further includes: determining a value indicating an amount of filtering of the reconstructed video frame, wherein the alternative base quantization parameter includes the value indicating the amount of filtering.

Example 42: the non-transitory computer-readable medium of any of Examples 31-41, wherein the set of operations further includes: determining a distance between the reconstructed video frame and a closest reference frame, wherein the alternative base quantization parameter includes the distance between the reconstructed video frame and a closest reference frame.

Example 43: the non-transitory computer-readable medium of any of Examples 31-42, wherein the set of operations further includes: determining a distance between the reconstructed video frame and a closest reference frame; and normalizing the distance between the reconstructed video frame and the closest reference frame, wherein the alternative base quantization parameter includes the distance that is normalized.

Example 44: the non-transitory computer-readable medium of any of Examples 31-43, wherein the alternative base quantization parameter includes one of: a slice quantization parameter and an offset to the slice quantization parameter, or a block quantization parameter and an offset to the block quantization parameter.

Example 45: the non-transitory computer-readable medium of any of Examples 31-44, wherein the alternative base quantization parameter includes one of: a single quantization parameter offset that is applied to all components of the input, two quantization parameter offsets, wherein a first quantization parameter is applied to a luma component of the input and a second quantization parameter is applied to chroma components of the input, and three quantization parameter offsets, wherein a third quantization parameter is applied to the luma component of the input, a fourth quantization parameter is applied to a first chroma component of the input, and a fifth quantization parameter is applied to a second chroma component of the input.

Example 46: a device comprising: a decoder configured to generate the reconstructed video frame, and apply one or more in-loop filters to the reconstructed video frame to generate a filtered reconstructed video frame, the one or more in-loop filters including a neural network in-loop filter that receives an input including an alternative base quantization parameter that is distinct from a base quantization parameter.

Example 47: the device of Example 46, wherein the alternative base quantization parameter includes one of: a temporal identifier level of the reconstructed video frame, and wherein the temporal identifier level indicates a dependency of the reconstructed video frame to other previously reconstructed video frames, an offset to adjust the temporal identifier level, or a combination thereof.

Example 48: the device of Example 47, wherein the temporal identifier level of the reconstructed video frame is further multiplied by an adjustment factor.

Example 49: the device of any of Examples 46-48, wherein the alternative base quantization parameter includes a difference between a quantization parameter of a current slice of the reconstructed video frame and a first frame of a group of pictures.

Example 50: the device of Example 49, wherein the first frame of the group of pictures corresponds to an Intra coded frame.

Example 51: the device of Example 49, wherein the alternative base quantization parameter further includes an offset to the difference.

Example 52: the device of any of Examples 46-51, wherein the decoder is further configured to: compute an objective quality metric of the reconstructed video frame based on an original video frame and the reconstructed video frame, wherein the alternative base quantization parameter includes the objective quality metric.

Example 53: the device of Example 52, wherein, to compute the objective quality metric of the reconstructed video frame based on the original video frame and the reconstructed video frame, the decoder is further configured to normalize the objective quality metric.

Example 54: the device of Example 53, wherein the objective quality metric is one of peak signal-to-noise ratio (PSNR), Mean Square Error (MSE), or multi-scale structural similarity index measure (MS-SSIM).

Example 55: the device of any of Examples 46-54, wherein the decoder is further configured to: determine a value indicating an amount of filtering of the reconstructed video frame, wherein the alternative base quantization parameter includes the value indicating the amount of filtering.

Example 56: the device of any of Examples 46-55, wherein the decoder is further configured to: determine a value indicating an amount of filtering of the reconstructed video frame, wherein the alternative base quantization parameter includes the value indicating the amount of filtering.

Example 57: the device of any of Examples 46-56, wherein the decoder is further configured to: determine a distance between the reconstructed video frame and a closest reference frame, wherein the alternative base quantization parameter includes the distance between the reconstructed video frame and a closest reference frame.

Example 58: the device of any of Examples 46-57, wherein the decoder is further configured to: determine a distance between the reconstructed video frame and a closest reference frame; and normalize the distance between the reconstructed video frame and the closest reference frame, wherein the alternative base quantization parameter includes the distance that is normalized.

Example 59: the device of any of Examples 46-58, wherein the alternative base quantization parameter includes one of: a slice quantization parameter and an offset to the slice quantization parameter, or a block quantization parameter and an offset to the block quantization parameter.

Example 60: the device of any of Examples 46-59, wherein the alternative base quantization parameter includes one of: a single quantization parameter offset that is applied to all components of the input, two quantization parameter offsets, wherein a first quantization parameter is applied to a luma component of the input and a second quantization parameter is applied to chroma components of the input, and three quantization parameter offsets, wherein a third quantization parameter is applied to the luma component of the input, a fourth quantization parameter is applied to a first chroma component of the input, and a fifth quantization parameter is applied to a second chroma component of the input.

Moreover, the present aspects are not limited to VVC or HEVC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if embodiments described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some embodiments, examples, aspects, and features may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

One or more of the embodiments, examples, aspects, and features presented herein can be implemented as a computer-readable storage medium having computer readable code stored thereon for programming a computer (e.g., comprising a processor) to perform a method as described and claimed herein. Any suitable computer-usable or computer readable medium may be utilized. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. In the context of this document, a computer-usable or computer-readable medium may be any medium that can contain, store, communicate, propagate, or transport the program for use by or in connection with the instruction execution system, apparatus, or device.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "one of," without a more limiting modifier such as "only one of," and when applied herein to two or more subsequently defined options such as "one of A and B" should be construed to mean an existence of any one of the options in the list alone (e.g., A alone or B alone) or any combination of two or more of the options in the list (e.g., A and B together).

A device or structure that is "configured" in a certain way is configured in at least that way but may also be configured in ways that are not listed.

The terms "coupled," "coupling," or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples and embodiments for the purpose of streamlining the disclosure. This method of disclosure is not to be interpreted as reflecting an intention that the claimed subject matter requires more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

This, the present disclosure provides, among other things, a neural network based in-loop filter. Various features and advantages of the invention are set forth in the following claims.

**Claims**

1.  A method for filtering a reconstructed video frame, the method comprising:

    generating the reconstructed video frame; and
    applying one or more in-loop filters to the reconstructed video frame to generate a filtered reconstructed video frame, the one or more in-loop filters including a neural network in-loop filter that receives an input including an alternative base quantization parameter that is distinct from a base quantization parameter.

2.  The method of claim 1, wherein the alternative base quantization parameter includes one of:

    a temporal identifier level of the reconstructed video frame, and wherein the temporal identifier level indicates a dependency of the reconstructed video frame to other previously reconstructed video frames,
    an offset to adjust the temporal identifier level, or
    a combination thereof.

3.  The method of claim 2, wherein the temporal identifier level of the reconstructed video frame is further multiplied by an adjustment factor.

4.  The method of claim 1, wherein the alternative base quantization parameter includes a difference between a quantization parameter of a current slice of the reconstructed video frame and a first frame of a group of pictures.

5.  The method of claim 4, wherein the alternative base quantization parameter further includes an offset to the difference.

6.  The method of claim 1, further comprising:

computing an objective quality metric of the reconstructed video frame based on an original video frame and the reconstructed video frame,
wherein the alternative base quantization parameter includes the objective quality metric.

7. The method of claim 1, further comprising:

determining a value indicating an amount of filtering of the reconstructed video frame,
wherein the alternative base quantization parameter includes the value indicating the amount of filtering.

8. The method of claim 1, further comprising:

determining a value indicating an amount of filtering of the reconstructed video frame,
wherein the alternative base quantization parameter includes the value indicating the amount of filtering.

9. The method of claim 1, further comprising:

determining a distance between the reconstructed video frame and a closest reference frame,
wherein the alternative base quantization parameter includes the distance between the reconstructed video frame and a closest reference frame.

10. The method of claim 1, further comprising:

determining a distance between the reconstructed video frame and a closest reference frame; and
normalizing the distance between the reconstructed video frame and the closest reference frame,
wherein the alternative base quantization parameter includes the distance that is normalized.

11. The method of claim 1, wherein the alternative base quantization parameter includes one of:

a slice quantization parameter and an offset to the slice quantization parameter, or
a block quantization parameter and an offset to the block quantization parameter.

12. The method of claim 1, wherein the alternative base quantization parameter includes one of:

a single quantization parameter offset that is applied to all components of the input,
two quantization parameter offsets, wherein a first quantization parameter is applied to a luma component of the input and a second quantization parameter is applied to chroma components of the input, and
three quantization parameter offsets, wherein a third quantization parameter is applied to the luma component of the input, a fourth quantization parameter is applied to a first chroma component of the input, and a fifth quantization parameter is applied to a second chroma component of the input.

13. The method of any of the preceding claims, further comprising encoding the alternative base quantization parameter for the neural network in-loop filter in a bitstream.

14. A device including an encoder configured to perform a method according to any of claims 1-13.

15. A device including a decoder configured to perform a method according to any of claims 1-12.

FIG. 1

FIG. 2

**FIG. 3**

400

Reconstructed frame → DBF → Input 0 / Input 1 / Input 2 → CNN Filter → 415 (scale) → 420 → ALF → Final frame

405

410

**FIG. 4**

500

Reconstructed frame → DBF → Input 0 / Input 1 / Input 2 → CNN Filter → 415 (scale) → 420 → ALF → Final frame

405

410

**FIG. 5**

FIG. 6

505A

Channel Y

Channel U — Up-sampling →

505B

Channel V — Up-sampling →

505B

NN Filter

Channel Y

Channel U

Channel V

## FIG. 7

Inputs

800

Unfiltered Rec

805 — Param_1

805 — Param_2

...

805 — Param_N

810

Calculate *Cost_0, Cost_1, Cost_2, Cost_3, Cost_N+1*
*Indication = arg min Cost_i*

815

Indication < N+1

820 YES

*Param_Id = Indication*
for all blocks

NO   825

*Param_Id* signaled for each
block

## FIG. 8A

*Inputs, Param_Id*

800

830

*Param_Id > 0*

NO

Yes

*Unfiltered Rec*

835 *Param_Id=1*   835 *Param_Id=2*   835 *Param_Id=N*

Param_1          Param_2    ...    Param_N

*Filtered Rec*

# FIG. 8B

1000

| | N | |
|---|---|---|
| W | C | E |
| | S | |

# FIG. 10

FIG. 9

FIG. 11

1200

LUMA                    CHROMA

# FIG. 12

1300

input of EIP

output of EIP

# FIG. 13

FIG. 14

1400

1500

FIG. 15

1600

2*W

T1

2*H

r

p

H

w

T2

FIG. 16

1700

010 001

prediction

transform

FIG. 17

EP 4 727 120 A1

410

| 505 | 510 | 515 | 520 | 525 | 1805 | 1810 |
|---|---|---|---|---|---|---|
| Rec [3] | Pred [3] | Bs [3] | QPBase [1] | QPSlice [1] | Prediction [3] | Residual [3] |
| CONV 3x3 | CONV 1x1 | CONV 1x1 | CONV 1x1 | CONV 3x3 | CONV 3x3 | CONV 3x3 |

540

## FIG. 18

410

| 505 | 510 | 515 | 520 | 525 | 530 | 1900 |
|---|---|---|---|---|---|---|
| Rec [3] | Pred [3] | Bs [3] | QPBase [1] | QPSlice [1] | IPB [3] | TId [1] |
| CONV 3x3 | CONV 1x1 | CONV 1x1 | CONV 1x1 | CONV 3x3 | CONV 3x3 | CONV 1x1 |

540

## FIG. 19

FIG. 20

FIG. 21

2200

GENERATE A RECONSTRUCTED VIDEO FRAME — 2210

APPLY ONE OR MORE IN-LOOP FILTERS TO RECONSTRUCTED VIDEO FRAME TO GENERATE FILTERED RECONSTRUCTED VIDEO WHERE THE ONE OR MORE IN-LOOP FILTERS INCLUDES A NEURAL NETWORK IN-LOOP FILTER THAT RECEIVES AN INPUT INCLUDING A PREDICTION SETTING USED WITH THE RECONSTRUCTED VIDEO FRAME, A TRANSFORM SETTING USED WITH THE RECONSTRUCTED VIDEO FRAME, AN IMPORTANCE SETTING OF THE RECONSTRUCTED VIDEO FRAME, OR A COMBINATION THEREOF — 2220

RECEIVE SECOND INPUT TO THE NEURAL NETWORK IN-LOOP FILTER OF MOTION VECTORS OF THE RECONSTRUCTED VIDEO FRAME OR PHASE OF THE INTERPOLATION FILTER FOR THE RECONSTRUCTED VIDEO FRAME — 2230

RECEIVE THIRD INPUT TO THE NEURAL NETWORK IN-LOOP FILTER OF AN INDICATION OF WHETHER RPR IS APPLIED TO THE RECONSTRUCTED VIDEO FRAME — 2240

## FIG. 22

2300

GENERATE A RECONSTRUCTED VIDEO FRAME — 2310

APPLY ONE OR MORE IN-LOOP FILTERS TO THE RECONSTRUCTED VIDEO FRAME TO GENERATE A FILTERED RECONSTRUCTED VIDEO FRAME, THE ONE OR MORE IN-LOOP FILTERS INCLUDING A NEURAL NETWORK IN-LOOP FILTER THAT RECEIVES AN INPUT INCLUDING AN ALTERNATIVE BASE QUANTIZATION PARAMETER THAT IS DISTINCT FROM A BASE QUANTIZATION PARAMETER — 2320

# FIG. 23

FIG. 24

**EUROPEAN SEARCH REPORT**

Application Number

EP 24 30 6681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GALPIN F ET AL: "Description of algorithms and software in neural network-based video coding (NNVC) version 3", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD2019 ; m63599 29 May 2023 (2023-05-29), XP030310904, Retrieved from the Internet: URL:https://jvet-experts.org/doc_end_user/ documents/30_Antalya/wg11/JVET-AD2019-v2.z ip JVET-AD2019-v1.docx [retrieved on 2023-05-29] * page 3 - page 12; figures 1-2 * ----- | 1-15 | INV. H04N19/117 H04N19/124 H04N19/154 H04N19/172 H04N19/174 H04N19/176 H04N19/70 H04N19/82 H04N19/86 |
| X | XIE (OPPO) Z ET AL: "EE1-related: on BaseQP parameter in EE1-1.1", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0128 ; m59460 14 April 2022 (2022-04-14), XP030300999, Retrieved from the Internet: URL:https://jvet-experts.org/doc_end_user/ documents/26_Teleconference/wg11/JVET-Z012 8-v1.zip JVET-Z0128_v1.docx [retrieved on 2022-04-14] * the whole document * ----- | 1,14,15 | |

TECHNICAL FIELDS SEARCHED (IPC)

H04N

The present search report has been drawn up for all claims

| Place of search | Date of completion of the search | Examiner |
|---|---|---|
| Munich | 10 March 2025 | Cyranka, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)